# EUROPÄISCHE PATENTSCHRIFT

(11) **EP 4 165 367 B1**
(45) Veröffentlichungstag und Bekanntmachung des Hinweises auf die Patenterteilung: **16.09.2026**
(21) Anmeldenummer: 21732836.8
(22) Anmeldetag: 09.06.2021
(51) Int. Cl.: G01B 11/25

(54) **VORRICHTUNG UND VERFAHREN ZUR AUFNAHME EINES PROJIZIERTEN PUNKTMUSTERS IN EINER ANZEIGEVORRICHTUNG**
APPARATUS AND METHOD FOR RECORDING A PROJECTED DOT PATTERN IN A DISPLAY DEVICE
APPAREIL ET PROCÉDÉ D'ENREGISTREMENT D'UN MOTIF DE POINTS PROJETÉ DANS UN DISPOSITIF D'AFFICHAGE

(30) Priorität: 10.06.2020 DE 102020207302
(43) Veröffentlichungstag der Anmeldung: 19.04.2023
(73) Patentinhaber: Fraunhofer-Gesellschaft zur Förderung der angewandten Forschung e.V., 80686 München (DE)
(72) Erfinder: WIPPERMANN, Frank, 07745 Jena (DE); DUPARRÉ, Jacques, 07745 Jena (DE); TÜNNERMANN, Andreas, 07745 Jena (DE)
(74) Vertreter: König, Andreas Rudolf
(86) Internationale Anmeldenummer: PCT/EP2021/065382
(87) Internationale Veröffentlichungsnummer: WO 2021/250051

(56) Entgegenhaltungen:
- CN-A- 109 616 015
- JP-A- 2015 114 343
- US-A1- 2019 204 782
- US-A1- 2019 266 939

## Beschreibung

Die vorliegende Erfindung bezieht sich auf eine Vorrichtung und ein Verfahren zur Aufnahme eines projizierten Punktmusters, insbesondere in Kombination mit einer Anzeigeeinrichtung zur Wiedergabe graphischer Information. Vorrichtungen zur Aufnahme eines projizierten Punktmusters sind beispielsweise in Einrichtungen zur Tiefenkartenerstellung und damit verbundenen Gesichtserkennung verwendbar.

Bekannte Technologien zur Tiefenkartenbestimmung zur sicheren Gesichtserkennung im Consumer-Bereich, die beispielsweise unter dem Begriff Face-ID oder Face-Recognition etabliert sind, setzen neben z.B. der Time-of-Flight ("ToF") Methode auf die Verfahren der strukturierten Beleuchtung oder aktivem Stereo. Hierzu wird typischerweise im NIR-Wellenlängenbereich ein bevorzugt nicht-reguläres Punktmuster in Richtung des Gesichts projiziert und mit einer oder zwei Abbildungsvorrichtungen das auf die Szene (Gesicht) projizierte Punktmuster wieder aufgenommen. Die Form/Deformation/Abstand zwischen einzelnen Komponenten der Szene beeinflusst die Lage der einzelnen Lichtpunkte in/auf dieser, es entsteht eine spezifische Verzerrung des aufgenommenen Punktmusters. Diese Information kann zur Rekonstruktion der Tiefenkarte/Form des betrachteten Objekts/Szene herangezogen werden.

CN 109616015 A bezieht sich auf eine Anzeigevorrichtung, insbesondere ein Display-Panel. Gemäß Absatz [0005] wird ein Display-Panel mit Gesichtserkennung und Messfunktionen bereitgestellt.

US 2019/266939 A1 bezieht sich auf ein Display und eine Bildaufnahmevorrichtung mit einer Mehrzahl von Bildsensoren.

US 2019/0204782 A1 bezieht sich auf die Darstellung eines Hologramms vermittels der Darstellung zweier Bilder.

JP 2015-114343 A bezieht sich auf die Bereitstellung eines kompakten und dünnen Bilderfassungsgeräts, das in der Lage ist, Streulicht, das in jeder Linse eines gestapelten Linsenarrays geführt wird, zu vermeiden und ein rekonstruiertes Bild zu erhalten.

Es besteht ein Bedarf an kompakten Einrichtungen zur Aufnahme eines projizierten Punktmusters in Kombination mit einer Anzeigevorrichtung und korrespondierender Verfahren.

Eine Aufgabe der vorliegenden Erfindung besteht deshalb darin, eine kompakte Vorrichtung zur Aufnahme eines projizierten Punktmusters und ein Verfahren hierzu bereitzustellen.

Diese Aufgabe wird durch den Gegenstand der unabhängigen Patentansprüche gelöst.

Ein Kerngedankte der vorliegenden Erfindung besteht darin, erkannt zu haben, dass Detektorpixelanordnungen zum Erfassen eines Gesichtsfeldes bzw. zum Erhalten eines Bildes eines Punktmusters von dem Gesichtsfeld derart mit einer Anzeigeeinrichtung kombiniert werden können, dass die Detektorpixelanordnungen in eine gleiche Richtung blicken, die auch von der Anzeigeeinrichtung zum Darstellen graphischer Information beleuchtet wird. So können die Detektorpixel beispielsweise an Anzeige-Pixeln der Anzeigevorrichtung vorbeiblicken. Dies ermöglicht eine Integration einer Anordnung einer Vorrichtung zur Aufnahme eines projizierten Punktmusters mit einer Vorrichtung zum Anzeigen graphischer Information, so dass die ermöglichten Funktionen einer Vorrichtung zur Aufnahme eines projizierten Punktmusters auch in entsprechenden Anzeigegeräten, etwa im Consumer-Bereich, Anwendung finden können und sehr kompakte Vorrichtungen erhalten werden können. Ziel der Erfindung ist es, kompakte Vorrichtungen zur Aufnahme eines projizierten Punktmusters mit einer Anzeigeeinrichtung für graphische Informationen zu kombinieren / ineinander zu integrieren.

Gemäß einem Ausführungsbeispiel umfasst eine Vorrichtung unter anderem eine Mehrzahl von gegeneinander geneigten abbildenden optischen Kanälen, von denen jeder eine Optik und zumindest eine Detektorpixelanordnung umfasst. Die Mehrzahl von optischen Kanälen ist ausgebildet, um durch Abbilden eines Gesichtsfeldes ein Bild eines Punktmusters von dem Gesichtsfeld zu erhalten. Eine Anzeigeeinrichtung der Vorrichtung weist eine Vielzahl von in einer Anzeige-Ebene angeordneten Anzeige-Pixeln auf, die ausgebildet sind, um eine graphische Information anzuzeigen. Die optischen Kanäle laufen durch die Anzeige-Ebene und sind für eine Abbildung des Gesichtsfeldes zwischen den Anzeige-Pixeln hindurch eingerichtet. Eine Auswerteeinrichtung der Vorrichtung ist mit Detektorpixeln der Detektorpixelanordnungen gekoppelt und ausgebildet, um das Punktmuster basierend auf einem eine Hyperauflösung bewirkenden Vergleich von Signalstärken unterschiedlicher Detektorpixel auszuwerten, um ein Auswerteergebnis zu erhalten, um die Vorrichtung zumindest teilweise basierend auf dem Auswerteergebnis zu steuern. Dies ermöglicht die Integration einer Anzeigeeinrichtung mit einer für die Erfassung des projizierten Punktmusters vorgesehen Detektorpixelanordnung, so dass kompakte Vorrichtungen erhalten werden können.

Gemäß einem Ausführungsbeispiel umfasst die Vorrichtung einen Projektor, der ausgebildet ist, um ein bekanntes Punktmuster auszusenden. Dies ermöglicht wiederrum eine Aufnahme eines durch die Szene /das Gesicht verzerrten Punktmusters durch die Bildaufnahmevorrichtung. Projektor und Bildaufnahmevorrichtung sind hinsichtlich ihrer Parameter aufeinander abgestimmte um ein möglichst kurzbauendes Gesamtsystem zu erhalten.

Gemäß einem Ausführungsbeispiel ist der Projektor ausgebildet, um das Punktmuster mit einem Infrarotspektrum auszusenden. Die optischen Kanäle sind auf das Infrarotspektrum angepasst und/oder erfassen das Infrarotspektrum z. B. durch den Einsatz entsprechender Filter oder Materialen für die Detektorpixelanordnungen selektiv. Dies ermöglicht eine Projektion und/oder Verarbeitung des Punktmusters außerhalb eines Wellenlängenbereichs, der für die Menschen sichtbar ist.

Gemäß einem Ausführungsbeispiel ist der Projektor ausgebildet, um das Punktmuster als zumindest abschnittsweise nicht-periodisches oder pseudo-zufälliges Muster auszusenden. Dies ermöglicht eine robuste Auswertung des projizierten Punktmusters unter Vermeidung von Mehrdeutigkeiten.

Gemäß einem Ausführungsbeispiel ist der Projektor ausgebildet, um das Punktmuster mit zumindest 5000 Punkten auszusenden. Dies ermöglicht eine gute laterale Auflösung der Tiefenkarte für das Gesichtsfeld.

Gemäß einem Ausführungsbeispiel sind der Projektor und die Anordnung der optischen Kanäle so aufeinander abgestimmt, um bei einer Referenzentfernung des Gesichtsfeldes zur Vorrichtung das Punktmuster so auszusenden und aufzunehmen, dass im Mittel jedes Detektorpixel gleichzeitig höchstens einen Punkt des Punktmusters erfasst. Dies ermöglicht einen guten Vergleich von Lichtstärken benachbarter Detektorpixel.

Gemäß einem Ausführungsbeispiel umfasst der Projektor ein Array von Oberflächenemittern (VCSEL) und eine Optik umfassend ein diffraktives Element. Dies ermöglicht eine kompakte Ausgestaltung des Projektors sowie die optionale Anordnung zusätzlicher Strahlformen der Optiken oder Linsen, etwa einer Fresnel-Linse.

Gemäß einem Ausführungsbeispiel ist die Auswerteeinrichtung ausgebildet, um das Auswerteergebnis basierend auf einem Vergleich des Bildes mit einem Referenzmuster zu erhalten. Dies ermöglicht die präzise Bestimmung von Abweichungen in dem Gesichtsfeld und mithin eine Bestimmung der Tiefenkarte.

Erfindungsgemäß ist die Auswerteeinrichtung ausgebildet, um den Vergleich von Signalstärken unterschiedlicher Detektorpixel auszuführen, um eine Position von Punkten des Punktmusters im Gesichtsfeld zu bestimmen, die präziser ist als eine Abtastung des Gesamtgesichtsfeldes mittels der Detektorpixel. Unter Vernachlässigung von Bereichen zwischen den Einzelpunkten kann somit basierend auf einer präzisen Positionsbestimmung der Punkte eine genaue Tiefenkarte erstellt werden.

Erfindungsgemäß ist die Auswerteeinrichtung ausgebildet, um basierend auf einer Bewertung einer Lichtstärke mit der derselbe Lichtpunkt auf benachbarte Detektorpixel abgebildet wird unter Berücksichtigung einer Responsefunktion der Detektorpixel Positionen von Punkten in dem Bild zu bestimmen. Durch den relativen Vergleich der Lichtstärke kann somit eine präzise Positionsbestimmung der Lichtpunkte erhalten werden als auch mit einer vergleichsweise geringen Anzahl von Detektorpixeln und kurzen Brennweite der Optiken und einen mithin geringen Bauraum ein exaktes Ergebnis erhalten werden.

Gemäß einem Ausführungsbeispiel ist die Auswerteeinrichtung ausgebildet, um eine Verzerrung in dem Punktmuster zu bestimmen und basierend auf der Verzerrung eine Tiefenkarte des Gesichtsfeldes zu erstellen, und um basierend auf der Tiefenkarte das Auswerteergebnis zu erhalten. Basierend auf der Verzerrung kann somit eine vergleichsweise berechnungsarme Tiefenkarte erhalten werden, was insbesondere für mobile Vorrichtungen vorteilhaft ist, bei denen auf hochabtastende oder hochauflösende Optiken und/oder Bildsensoren verzichtet werden soll.

Gemäß einem Ausführungsbeispiel ist die Vorrichtung ausgebildet, um basierend auf dem Auswerteergebnis eine Nutzungsberechtigung eines Nutzers, der zumindest teilweise in dem Gesichtsfeld angeordnet ist, zu bestimmen und um die Vorrichtung in Übereinstimmung mit der Nutzungsberechtigung zu steuern. Dies ermöglicht eine für einen Nutzer komfortable Bestimmung einer Zugriffsberechtigung, da beispielsweise auf die Eingabe eines Passworts oder PINs verzichtet werden kann. Die positiv bewertete Zugriffsberechtigung zieht beispielsweise die Aktivierung der Anzeigevorrichtung nach sich.

Gemäß einem Ausführungsbeispiel sind Mikrolinsen der Optiken der optischen Kanäle und die Anzeige-Pixel in einem gemeinsamen Ebenenbereich angeordnet. Dies ermöglicht eine platzsparende Anordnung von Anzeigevorrichtung und Aufnahmevorrichtung für das projizierte Punktmuster allgemein und im speziellen eine Vermeidung einer zu großen Länge der optischen Kanäle der Optiken einerseits als auch eine Verdeckung der Anzeige-Pixel durch Optiken andererseits.

Gemäß einem Ausführungsbeispiel sind Optiken zwischen benachbarten Anzeige-Pixeln angeordnet. Dies ermöglicht eine besonders geringe laterale Ausdehnung der Anordnung insgesamt und für eine fixe Blendenzahl der Optiken auch besonders geringe Bauhöhe bzw. Länge optischer Kanäle.

Gemäß einem Ausführungsbeispiel sind die optischen Kanäle in einer ersten zweidimensionalen Anordnung und die Anzeige-Pixel in einer zweiten zweidimensionalen Anordnung angeordnet. Dies ermöglicht eine flächige Ausgestaltung der Anzeige-Pixel und der Detektorpixelanordnung. Bei einem zumindest teilweisen Überlapp der beiden zweidimensionalen Anordnungen kann ferner eine hohe Integrationsdichte erhalten werden.

Gemäß einem Ausführungsbeispiel ist die Auswerteeinrichtung für eine Auswertung von strukturiertem Licht oder einer aktiven-Stereo-Auswertung eingerichtet. Dies ermöglicht die Anwendung robuster Verfahren oder Algorithmen zur Bestimmung der Tiefenkarte.

Gemäß einem Ausführungsbeispiel weist zumindest eine der Detektorpixelanordnungen eine Mehrzahl von Detektorpixeln auf. Erfassungsbereiche der Mehrzahl von Detektorpixeln überlappen in einem Umfang von zumindest 50%. Dies ermöglicht eine präzise Ausführung des Vergleichs von Signalstärken unterschiedlicher, insbesondere benachbarter Detektorpixel als Response auf den gleichen aufgenommenen Lichtpunkt.

Gemäß einem Ausführungsbeispiel ist die Detektorpixelanordnung in einer Bildebene der Optiken angeordnet. Dies ermöglicht die fokussierte Abbildung der Lichtpunkte auf die Detektorpixelanordnung.

Gemäß einem Ausführungsbeispiel ist die Auswerteeinrichtung ausgebildet, um das Gesichtsfeld mit einer Mehrzahl von Detektorpixeln je optischem Kanal und daran anschließend bezüglich mehrerer optischer Kanäle auszuwerten. Dies ermöglicht die präzise Auswertung eines durch einen optischen Kanal erfassten Teilbereichs des Gesichtsfelds mittels der Mehrzahl von Detektorpixeln und eine Kombination der Informationen basierend auf der Berücksichtigung mehrerer optischer Kanäle für das Gesamtgesichtsfeld.

Gemäß einem Ausführungsbeispiel betragen Brennweiten der optischen Kanäle weniger als 1 mm. Dies ermöglicht eine geringe Baugröße der Vorrichtung.

Erfindungsgemäß ist eine Optik umfassend eine Linse oder einen Linsenstapel gebildet. Dies ermöglicht eine individuelle Anpassung der Optik an die jeweiligen Anforderungen an den optischen Kanal.

Gemäß einem Ausführungsbeispiel weisen Mikrolinsen unterschiedlicher optischer Kanäle kanalindividuelle optische Eigenschaften auf. Dies ermöglicht die die Anpassung der Optiken an eine kanalindividuelle Relativposition des optischen Kanals in der Vorrichtung.

Gemäß einem Ausführungsbeispiel ist hierzu die Vorrichtung so ausgeführt, dass die Mikrolinsen kanalindividuell so gebildet sind, dass in einer dem jeweiligen optischen Kanal zugeordneten geneigten Blickrichtung eine fokussierte Abbildung des (Teil-)Gesichtsfeldes auf die Detektorpixelanordnung erhalten wird, wofür sich beispielsweise anamorphotische Linsen mit nicht-rotationssymmetrischer asphärischer Oberflächenbeschreibung oder auch Freiformen anbieten. Dies ermöglicht besonders kompakte Vorrichtungen mit wenigen Linsenlagen pro Optik.

Gemäß einem Ausführungsbeispiel weist eine Vorrichtung zumindest eine Blendenstruktur auf, die zwischen den Detektorpixelanordnungen und der Optik-Ebene angeordnet ist, um eine Falschlichtunterdrückung benachbarter optischer Kanäle bereitzustellen. Dies ermöglicht eine präzise Durchführung der Vergleiche ohne die Beeinflussung durch Geisterbilder.

Gemäß einem Ausführungsbeispiel weist die Vorrichtung zumindest eine falschlichtunterdrückende Struktur auf, die zwischen benachbarten Detektorpixelanordnungen und zwischen einer Ebene derselben und der Optik-Ebene angeordnet ist, um eine Falschlichtunterdrückung benachbarter optischer Kanäle bereitzustellen. Auch diese Falschlichtunterdrückung ermöglicht eine präzise Vergleichsdurchführung und ermöglicht ferner in synergetischer Weise die Nutzung der falschlichtunterdrückenden Struktur als Abstandshalter, etwa wenn die Optiken unterschiedlicher optischer Kanäle über ein gemeinsames Substrat miteinander verbunden sind und die falschlichtunterdrückende Struktur mit dem Substrat verbunden ist. Auch unabhängig hiervon können die Optiken über diese falschlichtunterdrückende Struktur, die beispielsweise als gerade oder geneigte Wände optischer Kanäle verstanden werden kann, beabstandet werden. Anders als die zuvor dargestellten Blendenlagen kann hierdurch ein Luftraum zwischen den Detektorpixeln und den Optiken erhalten werden, da die Falschlichtunterdrückung mittels Blendenstruktur eine entsprechende Halterung vorsieht.

Gemäß einem Ausführungsbeispiel ist die Vorrichtung für eine Gesichtserkennung eines Nutzers, insbesondere eine tiefenkartenbasierte Gesichtserkennung eingerichtet. Dies ermöglicht eine komfortable Bedienung der Vorrichtung.

Gemäß einem Ausführungsbeispiel ist die Vorrichtung als Smart-Watch gebildet. Die geringe Länge der optischen Kanäle, die in Ausführungsbeispielen ermöglicht wird, wirkt besonders synergetisch mit kleinen Vorrichtungen mit Anzeige-Funktion, insbesondere Displays in Smart-Watches zusammen.

Gemäß einem Ausführungsbeispiel wird ein Verfahren zum Bereitstellen einer hierin beschriebenen Vorrichtung bereitgestellt.

Weitere vorteilhafte Ausgestaltungen sind der Gegenstand weiterer abhängiger Patentansprüche.

Weitere vorteilhafte Ausgestaltungen werden nachfolgend Bezug nehmend auf die beiliegenden Zeichnungen erläutert. Es zeigen hierzu:
- Fig. 1: eine schematische Seitenschnittansicht einer Vorrichtung gemäß einem Ausführungsbeispiel;
- Fig. 2: eine schematisch Seitenschnittansicht einer Vorrichtung gemäß einem Ausführungsbeispiel, die einen Projektor aufweist;
- Fig. 3a: eine schematische Seitenschnittansicht eines Teils der Vorrichtung aus Fig. 1 und/oder Fig. 2;
- Fig. 3b: eine schematische Seitenschnittansicht eines optischen Kanals aus Fig. 3a zur weiteren Verdeutlichung der auftretenden Effekte;
- Fig. 3c: eine detailliertere Darstellung des optischen Kanals aus Fig. 3b, bei dem zusätzlich eine räumliche Ausdehnung der Detektor-Pixel berücksichtigt ist;
- Fig. 4a: eine schematisch Seitenschnittansicht eines Verlaufs einer Responsefunktion gemäß einem Ausführungsbeispiel entlang einer x-Richtung;
- Fig. 4b: eine schematische Darstellung zweier Responsefunktionen, bei der die jeweiligen Bereiche innerhalb eines Pixel-Gesichtsfeldes des anderen Detektor-Pixels angeordnet sind;
- Fig. 4c: eine schematische Darstellung der Responsefunktionen aus Fig. 4b, die so angeordnet sind, dass die Auflösungsgrenze gerade eingehalten wird, gemäß einem Ausführungsbeispiel;
- Fig. 4d: eine schematische Darstellung der Responsefunktionen, in welcher die Responsefunktionen trennbar sind, eine schematische Darstellung;
- Fig. 5: eine schematische Darstellung der Brennweitenproblematik bei klassischer Auflösung;
- Fig. 6a: eine beispielhafte derartige Konfiguration, die bezüglich der Responsefunktionen einer Konfiguration aus Fig. 5 entsprechen kann, welche zwar mit klassischen Verfahren nicht auflösbar ist, gemäß Ausführungsbeispielen jedoch eine genaue Positionsbestimmung der Lichtpunkte des Punktmusters ermöglicht;
- Fig. 6b: eine schematische Darstellung des Konzepts aus Fig. 6a mit einer zweidimensionalen Anordnung von Detektor-Pixeln gemäß einem Ausführungsbeispiel;
- Fig. 7: eine schematische Seitenschnittansicht eines Teils einer Vorrichtung gemäß einem Ausführungsbeispiel, die falschlichtunterdrückende Strukturenzwischen optischen Kanälen aufweist;
- Fig. 8: eine schematische, ein-dimensionale Darstellung projizierter Lichtpunkte und der notwendigen hohen Abtastung durch Detektorpixel zur hinreichend genauen Positionsbestimmung der Lichtpunkte im Gesichtsfeld, im klassischen Ansatz;
- Fig. 9: im Vergleich zu Fig. 8 eine schematische Darstellung erfindungsgemäß ausgewerteter Detektorpixel gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

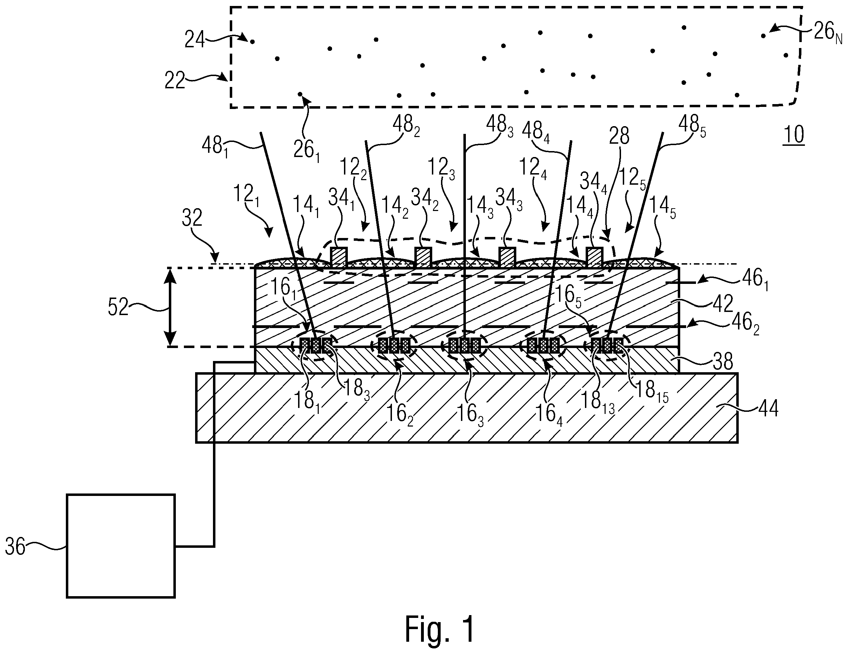

Fig. 1 zeigt eine schematische Seitenschnittansicht einer Vorrichtung 10 gemäß einem Ausführungsbeispiel. Die Vorrichtung 10 umfasst eine Mehrzahl von gegeneinander geneigten optischen Kanälen 12₁ bis 12₅. Beispielhaft sind fünf optische Kanäle 12₁ bis 12₅ dargestellt, es kann jedoch auch eine andere, insbesondere größere Anzahl optischer Kanäle angeordnet werden, beispielsweise zumindest 2, zumindest 4, zumindest 6, zumindest 9, zumindest 10, zumindest 20 oder mehr. In der dargestellten Seitenschnittansicht der Fig. 1 sind die optischen Kanäle in einem eindimensionalen Array dargestellt, Ausführungsbeispiele schaffen dabei aber auch Vorrichtungen, bei denen die optischen Kanäle 12₁ bis 12₅ in einer zweidimensionalen Anordnung angeordnet sind, etwa einer rechteckigen oder quadratischen Anordnung.

Jeder optische Kanal weist eine Optik 14₁ bis 14₅ und zumindest eine Detektorpixelanordnung 16₁ bis 16₅ auf. Zusätzliche Elemente, etwa Filter oder dergleichen können ebenfalls vorgesehen sein. Die Optiken 14₁ bis 14₅ können gleich aber auch verschieden zueinander gebildet sein und beispielsweise an die entsprechende Blickrichtung angepasst sein. Ferner kann jede der Optiken 14₁ bis 14₅ eine Linse aber auch einen Stapel von Linsen und/oder zusätzliche optisch wirksame Elemente aufweisen.

Die Detektorpixelanordnungen 16₁ bis 16₅ können eine gleiche aber auch eine verschiedene Anzahl von Detektorpixeln 18 aufweisen. Jede Detektorpixelanordnung 16ᵢ mit i = 1, ..., 5 weist dabei zumindest ein Detektorpixel 18ⱼ auf. In der dargestellten Ansicht der Fig. 1 sind die Detektorpixelanordnungen 16i als jeweils drei Detektorpixel aufweisend dargestellt, wobei die Detektorpixel in einer Zeile nebeneinander angeordnet sind. Wie es im Zusammenhang mit der Anordnung der optischen Kanäle beschrieben ist, können aber auch die Detektorpixelanordnungen 16 zweidimensionale Anordnungen von Detektorpixeln aufweisen. Die zweidimensionale Anordnung kann beliebig ausgestaltet sein, beispielhaft rechteckig oder quadratisch und beispielsweise 2, 6, 8 oder 9 oder auch eine andere insbesondere größere Anzahl von Detektorpixeln umfassen. Die Detektor-Pixelanordnungen 18 können in einer jeweiligen bevorzugt aber in einer gemeinsamen Bildebene der Optiken 14 angeordnet sein. Die Bildebene kann beispielsweise die Ebene sein, in der das Gesichtsfeld und insbesondere die darin projizierten Lichtpunkte durch die Optiken fokussiert abgebildet werden.

Die optischen Kanäle 12₁ bis 12₅ sind ausgebildet, um durch Abbildung eines Gesichtsfeldes 22 ein Bild eines Punktmusters 24 von dem Gesichtsfeld 22 zu erhalten oder bereitzustellen. Das Punktmuster 24 kann dabei eine Verteilung, beispielsweise in einem zumindest abschnittsweisen nicht-periodischen oder pseudo-zufälligen Muster angeordnete Punkte 26₁ bis 26_{N} aufweisen. Eine Anzahl N von Punkten 26 des Punktmusters 24 beträgt dabei beispielsweise zumindest 5000, zumindest 7000 oder zumindest 10.000, etwa in einer ca. 100x100-Anordnung.

Die Vorrichtung 10 umfasst ferner eine Anzeigeeinrichtung 28, die eine Vielzahl von in einer Anzeige-Ebene angeordnete Anzeige-Pixel 34₁ bis 34₄ aufweist, die ausgebildet sind, um eine graphische Information anzuzeigen. Die Anzeigeeinrichtung 28 kann ein Display oder dergleichen implementieren, welches eine Vielzahl von Pixeln, auch unterschiedlicher Farben aufweist. Beispielhaft handelt es sich bei den Anzeige-Pixeln um Pixel oder Bildelemente, die organische Leuchtdioden (OLED) umfassen, mithin ein OLED-Display. Die Pixel können in ihrer lateralen Ausdehnung gegenüber einem zwischenliegenden Pitch, also Mittenabstand klein ausgeführt sein können.

Die optischen Kanäle 12₁ bis 12₅ verlaufen durch die Anzeige-Ebene 32 und sind für die Abbildung des Gesichtsfeldes 22 zwischen den Anzeige-Pixeln 34₁ bis 34₄ hindurch eingerichtet, das bedeutet, die optischen Kanäle blicken an den Anzeige-Pixeln 34 vorbei. Eine Anzahl der Anzeige-Pixel 34₁ bis 34₄ sowie eine Anordnung derselben kann dabei beliebig sein und insbesondere mehrere 100x100, mehrere 1000x1000 oder mehr umfassen. Dabei ist eine 2D-Anordnung der Anzeige-Pixel beispielhaft quadratisch, es ist jedoch ebenso möglich eine andere Geometrie zu wählen, etwa rechteckig oder auch hiervon abweichend. Auch ist die Anzahlen der Pixel lediglich beispielhaft. Die Ebene 32 ist beispielhaft als Ebene parallel zu einer Ebene, in welcher die Detektorpixelanordnungen 16 angeordnet sind, dargestellt. Die getroffenen Ausführungen beziehen sich jedoch nicht ausschließlich oder limitierend auf eine ungekrümmte Ebene, sondern ermöglichen auch eine gekrümmte Ebene 32 und insbesondere einen Ebenenbereich in einem Bereich ±0,1 mm, ±0,8 mm oder ±0,5 mm oder dergleichen. Werden die Anzeige-Pixel 32 beispielsweise an Orten eines Scheitels der Linsen der Optiken 12₁ bis 12₅ platziert, so wird dies im Zusammenhang mit hierin beschriebenen Ausführungsbeispielen auch noch als Platzierung in einem gemeinsamen Ebenenbereich oder in der Anzeige-Ebene verstanden. Werden, wie es in Fig. 1 dargestellt ist, die Optiken 14ᵢ zwischen benachbarten Anzeige-Pixeln 34ⱼ angeordnet, so wird dies ebenfalls als Anordnung in einem gemeinsamen Ebenenbereich verstanden.

Die Vorrichtung umfasst eine Auswerteeinrichtung 36, die mit den Detektorpixeln 18 gekoppelt ist und ausgebildet ist, um das Punktmuster bzw. das Bild des Punktmusters 24 basierend auf einem eine Hyperauflösung bewirkenden Vergleich von Signalstärken unterschiedlicher Detektorpixel 18 auszuwerten, um ein Auswerteergebnis zu erhalten. Die Auswerteeinrichtung 36 ist ausgebildet, um die Vorrichtung 10 zumindest teilweise basierend auf dem Auswerteergebnis zu steuern. Beispielsweise kann die Auswerteeinrichtung 36 mit einer Schaltung elektrisch und/oder optisch gekoppelt sein, die an, auf oder in einem Detektorpixelsubstrat 38 angeordnet ist, welches die Detektorpixelanordnungen 16₁ bis 16₅ ganz oder teilweise stützt oder trägt.

Zwischen dem Detektorpixelsubstrat 38 und den Optiken 14₁ bis 14₅ bzw. der Anzeige-Ebene 32 kann ein transparentes Material 42 angeordnet sein, welches beispielsweise als Substrat für die Anzeige-Pixel 34 dienen kann und/oder als Optik-Träger bzw. Optik-Substrat dienen kann. Alternativ oder zusätzlich können ein oder mehrere der Anzeige-Pixel 34 an einer Optik 14 angeordnet oder abgestützt sein, beispielsweise indem die Optik 14 flächenmäßig größer ausgeführt wird als das Anzeige-Pixel und somit die Optik lediglich teilweise von dem Anzeige-Pixel verdeckt wird. Als transparentes Material 42 kann alternativ auch ein Fluid, etwa ein Gas oder Vakuum vorgesehen sein.

Optional kann ein Substrat 44 genutzt werden, um das Substrat 38, das transparente Material 42 und/oder weitere Komponenten zu tragen oder zu stützen.

Optional kann die Vorrichtung eine oder mehrere Blendenstrukturen 46₁ und/oder 46₂ aufweisen, die zwischen den Detektorpixelanordnungen 16ᵢ und der Ebene der Optiken 14, auch als Optik-Ebene bezeichnet, angeordnet sind. So ist es ebenfalls möglich, Blendenstrukturen so anzuordnen, dass die Optik-Ebene zwischen den Detektorpixelanordnungen 16 und einer oder mehrerer Blendenstrukturen 46 angeordnet ist, hierdurch könnte jedoch möglicherweise die Abstrahlung der Anzeige-Pixel 34 beeinträchtigt werden, was in Auslegungen zu berücksichtigen ist. Die Blendenstrukturen können genutzt werden, um eine Falschlichtunterdrückung benachbarter optischer Kanäle bereitzustellen. Alternativ oder zusätzlich kann auch eine Lichtabstrahlung der Anzeige-Pixel hin zu den Detektorpixelanordnungen ganz oder teilweise abgeschattet werden. Dies kann jedoch optional bleiben, insbesondere indem die Detektorpixel 18 in einem anderen Wellenlängenbereich sensitiv sind, als ein Wellenlängenbereich, der von den Anzeige-Pixeln 34 ausgestrahlt wird. Die Blendenstrukturen 46₁ und/oder 46₂ können auch dahin gehend implementiert werden, eine sogenannte "Pinhole-Struktur" für die Detektorpixelanordnungen 16 bereitzustellen. Dies ermöglicht ein selektives Gesichtsfeld für die einzelnen Detektorpixelanordnungen. Blickrichtungen 48₁ bis 48₅ der optischen Kanäle 12₁ bis 12₅ können dabei so gegeneinander geneigt sein, dass das Gesichtsfeld 22 aufgespannt wird, wobei es vorteilhaft aber nicht notwendig ist, dass das Gesichtsfeld 22 ein zusammenhängendes Gesichtsfeld ist. Die durch Hauptstrahlen dargestellten Blickrichtungen 48₁ bis 48₅ können jedoch so ausgelegt werden, dass auch bei Anordnung der Anzeige-Pixel 34 wieder ein Verlauf der optischen Kanäle 12₁ bis 12₅ ein Blick an den Anzeige-Pixeln 34 vorbei ermöglicht ist, entweder indem der Feldwinkel groß genug ist, so dass der optische Kanal 12₁ bis 12₅ nur teilweise durch das Anzeige-Pixel 34 abgeschattet wird und/oder indem das Anzeige-Pixel 34 abseits des optischen Kanals angeordnet wird.

Brennweiten der optischen Kanäle 12₁ bis 12₅ betragen in Ausführungsbeispielen weniger als 1 mm, weniger als 0,8 mm oder weniger als 0,6 mm, was entsprechend kurze Abstände 52 zwischen den Detektorpixelanordnungen 16 und den Optiken 14 ermöglicht. Dies kann in eine geringe Bauhöhe der Vorrichtung 10 resultieren, etwa wenn der Abstand 52 als parallel zu einer Dickenrichtung oder Bauhöhenrichtung angeordnet ist.

Optiken 14 unterschiedlicher optischer Kanäle 12 oder einzelne Mikrolinsen hieraus können kanalindividuelle optische Eigenschaften aufweisen, etwa im Hinblick auf eine vorhandene oder ausgelassene Symmetrie, eine Geometrie oder sonstige Eigenschaften. Die Mikrolinsen können dabei so gebildet sein, dass in einer dem optischen Kanal zugeordneten geneigten Blickrichtung eine fokussierte Abbildung des Gesichtsfeldes 22 erhalten wird. Basierend auf den geneigten Blickrichtungen 48 kommen hierfür beispielsweise anamorphotische Linsen mit nicht rotationssymmetrischer asphärischer Oberflächenbeschreibung und/oder Freiformen in Betracht, insbesondere für äußere Linsen. Durch die kanal-weise Anpassung der Optiken an ihre jeweilige Blickrichtung können sogenannte off-axis Aberrattionen, insbesondere Bildfeldwölbung und Astigmatismus, aber auch Koma und Verzeichnung minimiert werden. Ist beispielsweise ein punktsymmetrisches Array, etwa ein 3x3-Array oder ein 5x5-Array angeordnet, so kann ein mittlerer Kanal in einer oder mehreren Richtungen durchaus eine rotationssymmetrische Linse aufweisen.

Der Abstand 52 ist dabei beispielhaft an einer der den Detektorpixelanordnungen 16 zugewandten Seite der Optiken 14 angezeichnet, was jedoch lediglich beispielhaft ist. Anders als in Fig. 1, wo die Optiken 12₁ bis 12₅ jeweils eine einzelne Linse umfassen, können die Optiken 12₁ bis 12₅, auch einen Linsenstapel mit mehreren, entlang einer Richtung parallel zum Abstand 52 gestapelten Linsen umfassen.

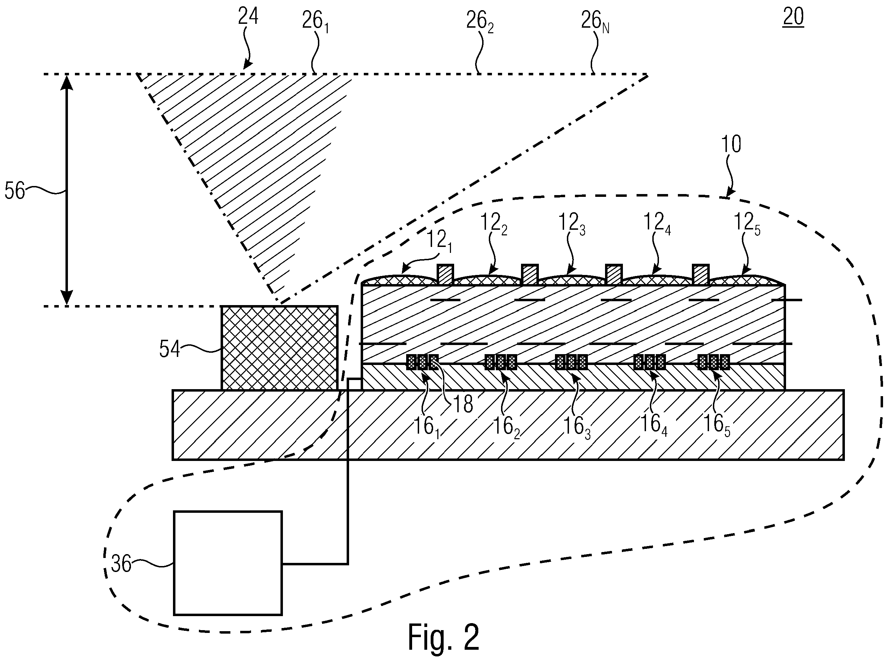

Fig. 2 zeigt eine schematisch Seitenschnittansicht einer Vorrichtung 20 gemäß einem Ausführungsbeispiel. Die Vorrichtung 20 basiert und umfasst beispielsweise die Vorrichtung 10 oder eine Ausgestaltung hiervon und weist ferner einen Projektor 54 auf, der ausgebildet ist, um das Punktmuster 24 auszusenden. Der Projektor kann beispielsweise ausgeführt sein, um das Punktmuster 24 umfassend ein Infrarotspektrum auszusenden, das bedeutet, einen Wellenlängenbereich, der zumindest teilweise mit einem Infrarotwellenlängenbereich überlappt oder zumindest Teile des Infrarotwellenlängenspektrums aufweist. Die optischen Kanäle 12₁ bis 12₄ können in ihrer Fokussierung und Sensitivität an das Infrarotspektrum angepasst sein und/oder das Infrarotspektrum selektiv erfassen. So können die Detektorpixelanordnungen 16₁ bis 16₅ beispielsweise so eingerichtet sein, dass sie durch ihrer Materialwahl für das ausgesendete Spektrum des Punktmusters 24 sensitiv sind. Sind die Detektorpixelanordnungen 16 auch für zusätzliche, weitere Wellenlängenbereiche sensitiv, so kann die Anordnung von Filterstrukturen vorgesehen sein, um unbenötigte oder unbeabsichtigte Wellenlängenbereiche zumindest zu dämpfen oder gar herauszufiltern. Auch wenn andere, bevorzugt nicht für das menschliche Auge sichtbare Wellenlängenbereiche verwendet werden können, sind Infrarotspektren in Ausführungsbeispielen bevorzugt. Besonders bevorzugt ist dabei das nahe Infrarotlicht mit Wellenlängenbereichen von zumindest 780 nm und höchstens 3 µm bzw. Teilen hiervon verwendet. Insbesondere sind die Wellenlängen 850nm und/oder 940nm von Interesse, da hier etablierte Emitter vorliegen.

Der Projektor 54 und die Anordnung der optischen Kanäle 12₁ bis 12₅ können so aufeinander abgestimmt sein, dass bei einer Referenzentfernung 56 des Gesichtsfeldes zur Vorrichtung 20 das Punktmuster 24 so von dem Projektor 54 ausgesendet wird und von den optischen Kanälen 12₁ bis 12₅ aufgenommen bzw. erfasst wird, das im Mittel jedes Detektorpixels 18 gleichzeitig höchstens einen einzigen Punkt 26 des Punktmusters 24 erfasst. Dies kann eine Einstellung der Divergenz einzelner Punkte des Punktmusters und deren Abstand untereinander und/oder eine Einstellung der Abtastung des Gesichtsfeldes durch Detektorpixel und optische Kanäle und/oder der Größe der Responsefunktionen einzelner Detektorpixel umfassen. Dies vereinfacht die Auswertung der Auswerteeinrichtung 36 erheblich, da eine Maximalamplitude eines Detektorpixels 18 durch einen einzigen Punkt 26 ausgelöst wird, so dass der von der Auswerteeinrichtung 36 durchgeführte Vergleich unter der Rahmenbedingung ausgeführt werden kann, in welchem Umfang dieser einzige Punkt 26 Lichtleistung auf das Detektorpixel 18 einbringt.

Der Projektor 54 kann ausgebildet sein, um das Punktmuster als ein zumindest abschnittsweises nicht-periodisches oder pseudo-zufälliges Muster auszusenden. Abschnitte, in denen das Muster nicht-periodisch oder pseudo-zufällig ist, können dabei so groß gewählt werden, dass Wiederholungen in dem Muster lediglich in voneinander weit-entfernten optischen Kanälen auftreten, was die Auswertung der Auswerteeinrichtung 36 vereinfachen kann. Es ist ebenfalls möglich, dass das gesamte Punktmuster 24 nicht-periodisch oder pseudo-zufällig ausgebildet ist. Die Auswerteeinrichtung kann für eine Auswertung von strukturiertem Licht oder einer Aktiven-Stereo-Auswertung eingerichtet sein.

Der Projektor 54 kann dabei gebildet sein, dass er ein Array von Oberflächenemittern (VCSEL) und eine Optik umfasst. Die Optik kann ein diffraktives Element umfassen und kann optional weitere strahlformende Optiken und/oder Linsen aufweisen.

Der Referenzabstand 56 kann dabei beispielsweise ein Abstand sein, der einer Kalibrierung zugrundgelegt wird und beispielsweise ein Abstand ist, der zumindest in Toleranzbereichen einem erwarteten Objektabstand entspricht. Die Vorrichtung 20 kann, ebenso wie die Vorrichtung 10, beispielsweise zumindest einen Teil einer Anzeige-Vorrichtung bereitstellen, deren Zugriffsberechtigung mittels der Auswerteeinrichtung 36 überprüft wird. Beispiele hierfür sind beispielsweise elektronische Türschlösser mit Gesichtserkennung, Mobiltelefone mit Gesichtserkennung und/oder Smartwatches mit Gesichtserkennung. Diese Geräte können auf einen Abstandsbereich abgestimmt sein, in welchem das Gesicht des Nutzers erwartet wird. In diesem Bereich kann der Referenzabstand 56 liegen, wobei auch beliebige andere Implementierungen möglich sind.

In anderen Worten besitzen Smartwatches typischerweise ein OLED-Display. Hierbei finden sich die (verschiedenfarbigen) Lichtemitter (Displaypixel oder Anzeige-Pixel) ca. in einem Abstand von knapp 100 µm zueinander. Smartwatches sollen trotz einer leistungsfähigen Batterie kompakt, insbesondere dünn sein. Smartwatches sollen nur personenspezifisch entsperrt werden können bzw. nutzungsbeschränkt sein, wofür sich Verfahren der Face-ID oder Face Recognition anbieten. Gleichfalls können oder sollen NIR-Punktarray-Emitter, etwa der Projektor 54, und entsprechende Abbildungsvorrichtungen, etwa umfassend Optiken 14ᵢ, das transparente Substrat 42 und die Detektorpixelanordnung 16₁ bis 16₅, möglichst kompakt sein. Ausführungsbeispiele implementieren die Idee, "Abbildungsvorrichtung unter dem OLED-Display", bzw. das OLED-Display platziert direkt oberhalb bzw. auf der Abbildungsvorrichtung bzw. das OLED-Display der Smartwatch und die Abbildungseinrichtung stark ineinander zu integrieren oder ineinander zu falten. Dafür kann die Array-Optik 14 als Abbildungseinrichtung vorgesehen werden, da eine flächige Anordnung der OLED-Displaypixel in den Zwischenbereichen der einzelnen abbildenden Kanäle angeordnet sein kann, oder möglicherweise sogar direkt auf den einzelnen Linsen. Selbst eine Array-Abbildungsoptik bedarf einer sehr großen Baulänge und auch einer großen lateralen Ausdehnung, wenn deren Auflösung und Abtastung möglichst groß sein soll, um ein für die Tiefenkartenbestimmung hinreichend dichtes Punktmuster aufzunehmen und im klassischen Sinne aufzulösen, d. h., nach bekannten Auflösungskriterien wie Rayleigh, Sparrow, Abbe oder dergleichen, die darauf basieren, die aufgenommen projizierten Lichtpunkte auf benachbarten Detektorpixeln voneinander zu trennen.

Demgegenüber sind Ausführungsbeispiele darauf ausgelegt, nach dem Vorbild von Facettenaugen bzw. Multiaperturabbildungsvorrichtungen und unter Nutzung von Mikrolinsenarrays mit geringer bis mittlerer Auflösung sehr geringe Baulänge der optischen Kanäle 12 und damit des gesamten Kameramoduls zu implementieren. Solche Strukturen lassen sich im Wafermaßstab herstellen und können in ihrer Erscheinungsform eher an einen (Computer-)Chip erinnern, als an ein klassisches Objektiv. Sie sind daher einerseits kostengünstig herzustellen und durch die flache, integrierte Bauform prädestiniert, in kompakte mobile Endgeräte eingebaut zu werden. Hauptsächliches Ziel solcher Anordnungen der Multiaperturabbildungsvorrichtungen war bislang die Erzeugung konventioneller Bilder, deren Auslösungsvermögen der geforderten Abbildungsaufgabe entsprach. Ausführungsbeispiele beziehen sich dahin gehend auf den Vergleich von Lichtstärken unter Kenntnis der sogenannten Responsefunktionen von Detektorpixeln, wie es nachfolgend detailliert ausgeführt wird.

Ausführungsbeispiele beziehen sich dabei auf eine Auswerteeinrichtung 36, die basierend auf der Bestimmung und dem Phänomen der Hyperacuity bzw. Hyperauflösung, das bedeutet, einer hochgenaue Positionsbestimmung voneinander getrennter Punktquellen durch Vergleich der Antworten (Responsen) in benachbarten Detektorpixeln, die diese Punkquellen gleichzeitig erfassen, als auch die Integration/Verwebung/Faltung der Kanäle des Abbildungssystems mit den Pixeln eines Displays bzw. Bildwiedergabegerätes. Ausführungsbeispiele ermöglichen darüber hinaus den Zusatz, dass die komplette konkrete Architektur, d. h., die explizite Projektion eines vorzugsweise nicht äquidistanten Musters voneinander hinreichend getrennter Lichtpunkte (etwa im nahen Infrarot, auch "NIR"), die Aufnahme dieses Punktmusters mittels einer entsprechenden Array-Optik, welche ferner direkt verwoben/integriert mit den Pixeln eines flächigen Displays ausgestaltet ist (was als "Kamera hinter OLED" oder "OLED auf Kamera" bezeichnet werden kann) erweitert wird. Dies geschieht insbesondere unter Zuhilfenahme der Methodik der Hyperacuity zur effizienten Anpassung des Array-Abbildungssystems an seine Abbildungsaufgabe, um die Anzahl der Detektorpixel und optischen Kanäle aber besonders auch die Baulänge der Optik auf einen geringen Wert, möglicherweise gar im Minimum zu reduzieren, um z. B. in Kompaktheits-getriebenen Anwendungen, etwa mobilen Endgeräten, insbesondere Smartwatches, integriert zu werden, welche mit dem Feature der Tiefenkarten basierten Gesichtserkennung ausgestattet werden können, etwa mittels structured light (strukturiertes Licht) oder aktivem Stereo. Das bedeutet, hierin beschriebene Vorrichtungen können für eine Gesichtserkennung eines Nutzers, insbesondere eine Tiefenkarten-basierte-Gesichtserkennung eingerichtet sein.

Die Array-Abbildungsvorrichtung kann beispielsweise mit mehreren Pixeln pro Abbildungskanal/Linse ausgestaltet sein, wie es in Fig. 1 und Fig. 2 dargestellt ist. Gegenüber dieser bevorzugten Ausgestaltungsform ist es alternativ aber auch möglich, lediglich einen Detektorpixel pro Kanal/Linse vorzusehen, was jedoch in einer deutlich größeren lateralen Ausdehnung resultiert.

Die einzelnen Linsen oder Linsengruppen bzw. Linsenstapel pro optischem Kanal können sich von Kanal zu Kanal in ihren Eigenschaften unterscheiden, um jeweils optimal für die jeweilige hauptsächliche Blickrichtung korrigiert oder angepasst zu sein. Die optischen Achsen der Kanäle sind unterschiedlich zueinander geneigt, um in ihrer Gesamtheit das komplette Gesichtsfeld abzutasten. Dies ist ein weiterer Vorteil dieser Anordnung: Durch die Aufteilung des Gesichtsfeldes auf viele optische Kanäle muss nicht eine Optik für das ganze Gesichtsfeld optimiert sein, was deren Komplexität erhöhen würde, sondern jeder Kanal muss nur ein deutlich begrenztes Gesichtsfeld von wenigen Grad verarbeiten können. Eine optomechanische Ausgestaltung der Array-Abbildungseinrichtung kann vielfältig sein. So kann es sich hierbei um einen sogenannten monolithischen Aufbau handeln, d. h. die Optiken sind mit den Detektorpixeln ohne Luftabstände aber über transparentes Material ("Substrat") vorzugsweise auch mit dazwischenliegenden Blendenebenen oder kanalisolierenden Wänden verbunden. Alternativ können die Optiken auf einem Substrat angeordnet sein und möglicherweise kopfüber bzgl. der Detektorpixelanordnung angeordnet sein und mit dieser über eine Gitterrost-artige Abstandshalter- bzw. Trägerstruktur, welche optisch-kanalisolierende / Übersprechen verhindernde, möglicherweise geneigte Wände beinhaltet, verbunden.

In bevorzugten Ausführungsformen sind die Vorrichtungen so eingerichtet, dass zur Aufnahme des Punktmusters, bei dem die Punkte hinreichend klein sind, d.h. winkelmäßig ca. eine Ausdehnung (Divergenz) von 0,1° - 0,3° besitzen, bei einem mittleren Abstand von 0,5° - 3° und voneinander getrennt sind, und das klassische Auflösungsvermögen der Kamera unter oder gar deutlich unter der geforderten Genauigkeit der Positionsbestimmung der Lichtpunkte liegen kann und damit die Brennweite und letztendlich die Baulänge erheblich reduziert werden kann, wenn zur Positionsbestimmung die Responsen benachbarter Kanäle auf den gleichen Lichtpunkt miteinander unter Ausnutzung der Kenntnis des Verlaufs der Responsefunktionen der Kanäle verglichen und ausgewertet werden. In weiter anderen Worten, die Genauigkeit der Positionsbestimmung der Lichtquellen liegt deutlich über dem eigentlichen Auflösungsvermögen der optischen Kanäle der Abbildungsvorrichtung. Die hochgenaue Positionsbestimmung der in einer Szene projizierten Lichtpunkte kann für die Tiefenkartenrekonstruktion verwendet werden und damit die Auflösung eines konventionellen Bildes zumindest in Teilen ersetzen.

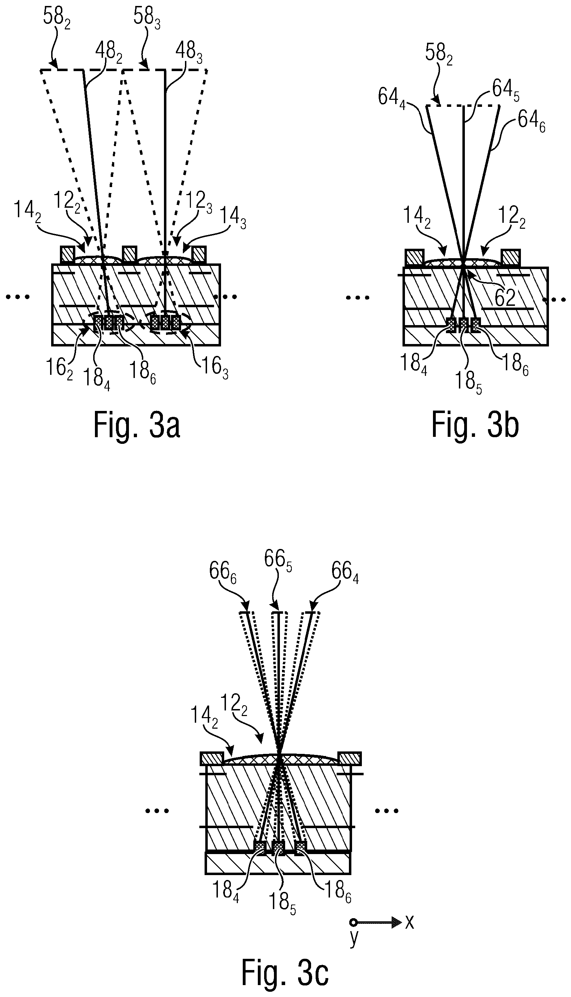

Fig. 3a zeigt eine schematische Seitenschnittansicht eines Teils der Vorrichtung 10 und/ oder 20, beispielsweise einen Ausschnitt umfassend die optischen Kanäle 12₂ und 12₃, die die Hauptblickrichtungen 48₂ und 48₃ aufweisen. Jeder optische Kanal 12₂ und/oder 12₃ kann dabei sein eigenes (Teil-)Gesichtsfeld 58₂ und/oder 58₃ aufspannen. Eine Größe des Teilgesichtsfeldes 58₂ und/oder 58₃ kann zumindest teilweise durch die Größe des zugeordneten Bildsensorbereichs, d. h., der Größe und/oder Anordnung der Detektor-Pixel 18 in den Detektor-Pixelanordnungen 16₂ bzw. 16₃ sowie der Brennweiten der Optiken 14₂ bzw. 14₃ beeinflusst sein. Die Blickrichtungen 48₂ und 48₃ sind zwischen den Kanälen der Vorrichtung leicht verkippt, um in Summe das Gesamtgesichtsfeld 22 aus Fig. 1 aufzuspannen. Dies kann beispielsweise durch einen Versatz zwischen einem Zentrum der Optik und einem Zentrum der zugeordneten Pixelgruppe/Detektor-Pixelanordnung und/oder durch eine spezielle Linsenform erreicht werden. Die Teilgesichtsfelder der Vorrichtung, die auch als Kanalgesichtsfelder bezeichnet werden können, können im Zielobjektabstand aneinander anschließen oder in geringem oder auch starkem Umfang miteinander überlappen.

Fig. 3b zeigt eine schematische Seitenschnittansicht des optischen Kanals 12₂ aus Fig. 3a zur weiteren Verdeutlichung der auftretenden Effekte. Basierend auf der räumlichen Beabstandung der Detektor-Pixel 18₄, 18₅ und 18₆ und der gemeinsamen Optik 14₂, die somit beispielsweise ein gemeinsames Optikzentrum 62 bereitstellen kann, können die Detektor-Pixel 18₄ bis 18₆ leicht voneinander verschiedene Blickrichtungen 64₄, 64₅ und 64₆ aufweisen. In anderen Worten schaut jedes Pixel innerhalb eines Kanals in eine licht andere Richtung, wobei die Detektor-Pixel 18₄ bis 18₆ insgesamt das Kanalgesichtsfeld 58₂ aufspannen können.

Fig. 3c zeigt eine detailliertere Darstellung des optischen Kanals 12₂ aus Fig. 3b, bei dem zusätzlich eine räumliche Ausdehnung der Detektor-Pixel 18₄, 18₅ und 18₆ berücksichtigt ist. Die räumliche Ausdehnung, etwa in einer x/y-Ebene senkrecht zur Abstandsrichtung 52 kann dazu führen, dass jedes Pixel 18₄ bis 18₆ ein ihm zugeordnetes Pixel-Gesichtsfeld 66₄, 66₅ und 66₆ aufspannt, wobei hierzu auch Beugungseffekte der Optik 14₂ zu berücksichtigen sind. Dieses Pixel-Gesichtsfeld 66₄ bis 66₆ kann eine Responsefunktion des jeweiligen Pixels 18₄, 18₅ bzw. 18₆ beschreiben oder bereitstellen. Als Responsefunktion kann der Winkelbereich auf der Objektseite definiert werden, der einem Detektorpixel als signalerzeugend zugeordnet wird.

Anders als in Fig. 3c dargestellt, überlappen die Responsefunktionen typischerweise räumlich und beschränken in ihrer Größe das effektive Auflösungsvermögen der Abbildungsvorrichtung, selbst wenn durch die Verwendung vieler Pixel und Kanäle viel feiner abgetastet wird. Die Erfassungsbereiche der Detektorpixel können einen Umfang von zumindest 50%, zumindest 70% oder zumindest 80% überlappen, insbesondere der Detektorpixel einer gemeinsamen Detektorpixelanordnung.

Unabhängig von hier nicht dargestellten Beugungseffekten kann die Responsefunktion durch Verkleinerung der Pixelgröße (was der Sensitivität abträglich ist) oder Verlängerung der Brennweite und damit der Baulänge (was der Kompaktheit abträglich ist) verkleinert werden. Ausführungsbeispiele lösen diesen Widerspruch durch einen eine Hyperauflösung bewirkenden Vergleich von Signalstärken unterschiedlicher Detektor-Pixel und der Kenntnis des Verlaufs deren Responsefunktionen. Dieser Vergleich ermöglicht die Positionsbestimmung selbst wenn das Bild nicht vollständig aufgelöst oder abgetastet wird, so dass die benötige Information zur Tiefenkartenrekonstruktion dennoch vorliegen kann.

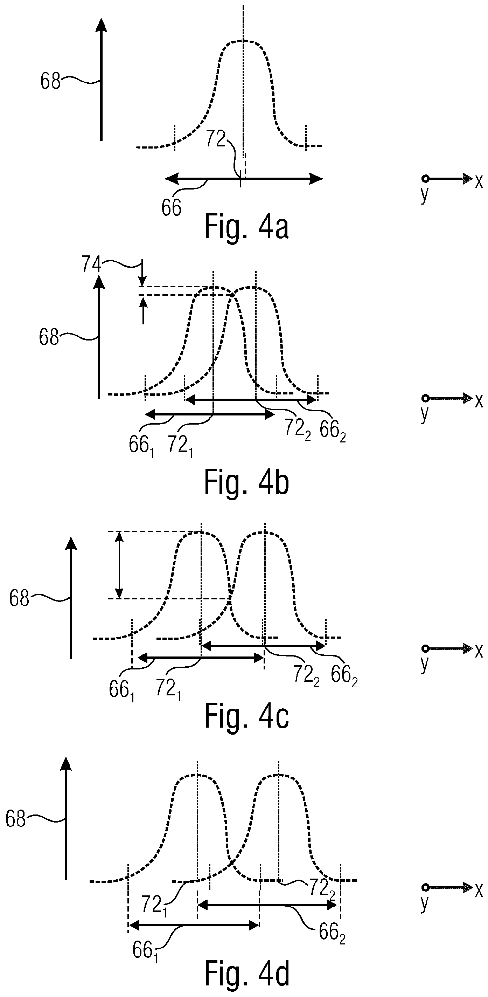

Fig. 4a zeigt eine schematische Seitenschnittansicht eines Verlaufs der Responsefunktion entlang der x-Richtung, wobei anzumerken ist, dass die Responsefunktion auch in der y-Richtung bestimmbar ist, da das Detektor-Pixel und die aus Beugungseffekten und Aberrationen resultierende Punktantwort der Optik eine zweidimensionale Flächenausdehnung aufweisen. Über das Pixel-Gesichtsfeld 66 kann das Detektor-Pixel eine veränderliche Signalamplitude oder Sensitivität 68 aufweisen, die in einem Bereich maximaler Sensitivität 72, etwa ein Mittenbereich, ein Maximum aufweist. Außerhalb des auszuwertenden Gesichtsfeldes 66 können zwar möglicherweise noch geringfügige Signalamplituden 68 erfasst werden, diese können jedoch für hier vorgenommene Betrachtungen außer Betracht bleiben. Die Responsefunktion kann insofern als Funktion des Abstandes des betrachteten Lichtpunktes von der optischen Achse des betreffenden Detektorpixels einen zum Rand hin abnehmenden Amplitudenwert bei gleicher Helligkeit des betrachteten Lichtpunkts liefern, was basierend auf der Kenntnis der Responsefunktion in nachfolgenden Auswertungen. berücksichtigt werden kann. Die Amplitude kann eine Bewertung einer Lichtstärke darstellen, d.h., ein gleich helles Objekt wird an unterschiedlichen Orten des Detektorpixels unterschiedlich bewertet.

Fig. 4b zeigt eine schematische Darstellung zweier Responsefunktionen 66₁ und 66₂, bei der die jeweiligen Bereiche 72₁ bzw. 72₂ innerhalb des Pixel-Gesichtsfeldes 66₂ bzw. 66₁ des anderen Detektor-Pixels angeordnet sind, was dazu führen kann, dass die Responsefunktionen im klassischen Sinne nicht voneinander trennbar oder für betrachtete ausgedehnte Objekte unabhängig voneinander auswertbar sind. Ein Amplitudenabfall 74 ist für eine zuverlässige Unterscheidung zu gering und beträgt beispielsweise lediglich 10 %, 15 % oder weniger als 20 % eines maximalen Amplitudenwerts.

Fig. 4c zeigt eine schematische Darstellung der Responsefunktionen 66₁ und 66₂, die so angeordnet sind, dass die klassische Auflösungsgrenze gerade eingehalten wird, etwa indem die Bereiche 72₁ und 72₂ jeweils genau auf den Randbereichen der effektiven Responsefunktionen 66₁ und 66₂ liegen.

In Fig. 4d ist eine Konfiguration dargestellt, in der die Responsefunktionen nach bekannten Auflösungskriterien wie Abbe oder Rayleigh trennbar sind. Die Bereiche 72₁ und 72₂ liegen außerhalb der jeweiligen anderen Responsefunktion 66₁ bzw. 66₂.

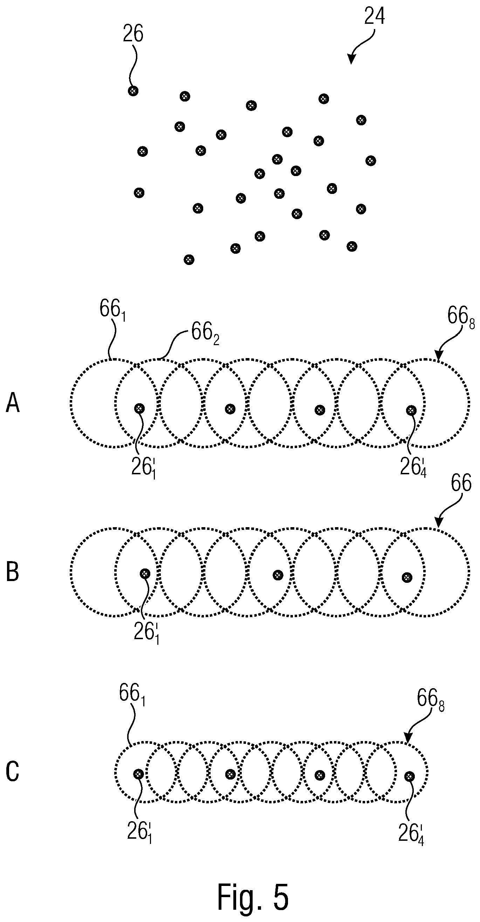

Fig. 5 zeigt eine schematische Darstellung der Brennweitenproblematik bei klassischer Auflösung. Das Punktmuster 24 umfasst eine Vielzahl von Punkten 26 und wird mittels der optischen Kanäle abgebildet, so dass in einem Bild abgebildete Punkte 26'₁ bis 26'₄ beispielhaft dargestellt sind. Eine Anordnung von Lichtpunkten und/oder Brennweitenvariation ist in den Zeilen A, B und C dargestellt. Zur Vereinfachung sind die Lichtpunkte in einer 1D-Darstellung äquidistant dargestellt.

In Zeile A ist eine klassische Abtastung dargestellt, bei der nur unter Auswertung der Variation des Grauwertes das Punktmuster bzw. das Abbild hiervon nicht auflösbar ist bzw. keine genaue Positionsbestimmung der Lage der Lichtpunkte möglich ist, da alle benachbarten Detektorpixel durchgängig auf in dieser Konstellation entsprechend dicht liegende Lichtpunkte Punkt 26'₁ - 26'₄ ansprechen, etwa die Responsefunktionen 66₁ und 66₂ für den Punkt 26'₁, das bedeutet, beide Pixel liefern einen entsprechend hohen Grauwert. So liefern bspw. die Responsefunktionen 66₃ und 66₄ basierend auf dem Lichtpunkt 26₂ ein Signal usw. weswegen beispielhaft keine messbare Modulation des Grauwertes zwischen den Detektorpixeln bestimmt werden kann, womit wiederrum die Position der Lichtpunkte nicht klassisch bestimmt werden kann.

In Zeile B ist eine geringere Punktdichte dargestellt, das bedeutet, das Punktmuster 24 ist durch eine geringere Dichte entsprechend angepasst, was den Widerspruch aus Zeile A aufzulösen vermag, allerdings ist einerseits die mögliche Auflösung der Tiefenkarte durch die reduzierte Dichte des Punktmusters an sich schon reduziert und andererseits immer noch keine hochgenaue Lagebestimmung der Punkte ermöglicht, da die Punkte sich für ein gleiches Signalergebnis an leicht verschiedenen Positionen befinden könnten. So löst z. B. der Lichtpunkt 26₁ in den Responsefunktionen 66₁ und 66₂ (bzw. den diesen zugeordneten Detektorpixeln) jeweils ein Signal aus, der Lichtpunkt 26₂ in den Responsefunktionen 66₄ und 66₅, während die Responsefunktion 66₃ bspw. kein Signal liefert, d. h., die Lichtpunkte 26₁. und 26₂ können gerade so grob voneinander getrennt werden, da sich hohe und niedrige Grauwerte abwechseln. D. h., es kann angegeben werden, dass sich in einigen groben Bereichen Lichtpunkte befinden, in anderen aber nicht. Aus diesem Wissen der variierenden Grauwerte lässt sich bei geringer Abtastung, d.h. mit einer Abtastung, die in ihrer Zahl ungefähr der Größenordnung der der aufzunehmenden Lichtpunkte entsprechen kann, aber noch nicht die genaue Lage der jeweilige Lichtpunkte im Muster bestimmen.

In Zeile C ist beispielhaft eine Vergrößerung der Brennweite dargestellt, die mit einer Vergrößerung der Baulänge einhergeht, welche es jedoch ermöglicht, eine räumliche Ausdehnung der Responsefunktionen 66₁ bis 66₈ zu verkleinern und damit eine Auflösung des Musters aus Zeile A ermöglichen würde (analog dem Vorgehen in Zeile B für Punktmuster mit geringerer Dichte: ein zwischenliegender Detektorpixel liefert kein Signal) und auch eine Anordnung mehrerer Pixel auf gleicher Fläche ermöglichen würde, jedoch die Anforderung der der geringen Baulänge verletzen würde.

Keine dieser Varianten ermöglicht kompakte Vorrichtungen, bei denen es gewünscht ist, das projizierte Lichtmuster mit einer hohen Dichte abzutasten, dessen Punktdichte aus angestrebter lateraler Auflösung der Tiefenkarte sowie der Tiefenauflösung resultiert und für gewöhnlich hoch ist. Hierzu wird das Gesichtsfeld mit einer Vielzahl von Responsefunktionen (von benachbarten Detektor-Pixeln und anschließend von Detektor-Pixeln benachbarter optischer Kanäle) abgetastet. Die dargestellten Kreise entsprechen beispielhaft Auflösungskriterien, etwa einer 1/e²-Weite der Responsefunktion oder Nullstelle der um einen Detektoreinfluss vergrößerten AIRY-Funktion.

Ausführungsbeispiele weisen eine Auswerteeinrichtung auf, die mit Detektor-Pixeln der Detektor-Pixelanordnung gekoppelt ist und ausgebildet ist, um das Punktmuster basierend auf einem eine Hyperauflösung bewirkenden Vergleich von Signalstärken unterschiedlicher Detektor-Pixel und der Kenntnis der Verläufe deren Responsefunktionen auszuwerten, um ein Auswerteergebnis zu erhalten. Hierzu werden die Detektor-Pixel so angeordnet, dass die Erfassungsbereiche, die Responsefunktionen, der Mehrzahl von Detektor-Pixel in einem Umfang von zumindest 50 % überlappen.

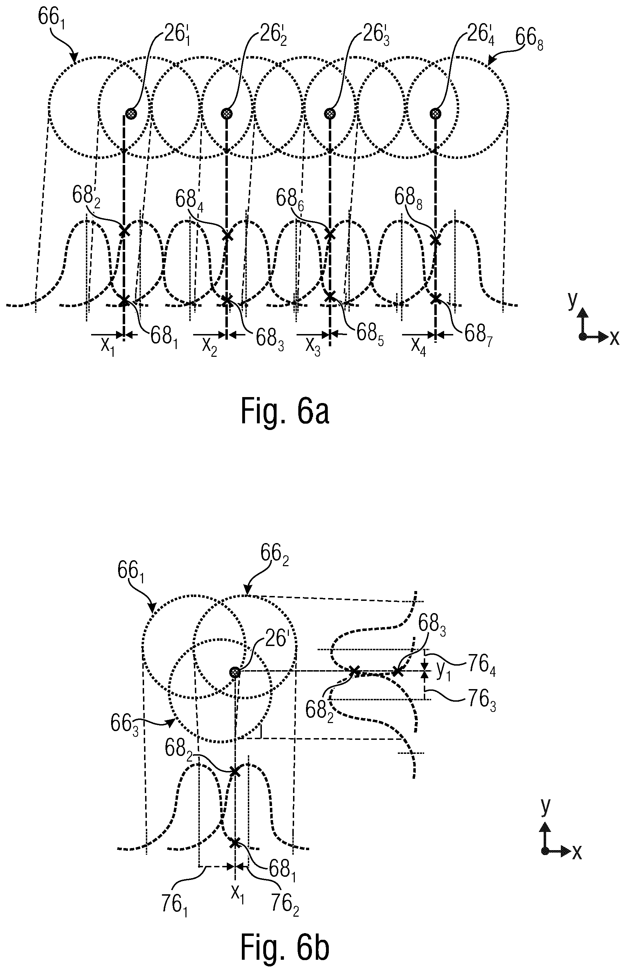

Fig. 6a zeigt eine beispielhafte derartige Konfiguration, die bezüglich der Responsefunktionen der Konfiguration A aus Fig. 5 entsprechen kann, welche zwar mit klassischen Verfahren keine Auflösung ausgedehnter Objekte erlaubt, mittels des beschriebenen Vergleichs jedoch eine genaue Positionsbestimmung voneinander getrennter Lichtpunkte ermöglicht. So können die Punkte 26'₁ bis 26'₄ jeweils von beispielhaft 2 Detektor-Pixeln erfasst werden, was aufgrund der überlappenden Responsefunktionen 66₁ bis 66₈ zu jeweils zwei Amplitudenwerten 68₁ und 68₂, 68₃ und 68₄, 68₅ und 68₆ sowie 68₇ und 68₈ führen kann, insbesondere unter der Voraussetzung oder Annahme, dass jedes Detektor-Pixel lediglich einen Punkt erfasst. Ein Verhältnis der Amplitudenwerte 68 kann somit entlang der x-Richtung unter Berücksichtigung der vorher anderweitig (in einem Kalibrierschritt) bestimmten Responsefunktionen der Detektorpixel zu einem präzisen Ergebnis bezüglich der Position des Lichtpunktes führen, selbst wenn das Bild selbst nicht vollständig aufgelöst werden kann. Eine hochgenaue Lagebestimmung der Positionen x₁ bis x₄ der Punkte 26'₁ bis 26'₄ relativ zu den bekannten Zentren der Responsefunktionen der einzelnen Pixel und mit Kenntnis deren Lage im Gesamtsystem auch global wird hierdurch ermöglicht.

Nachfolgend wird noch detailliert Bezug genommen auf Details zur Bestimmung und Verwendung von Responsefunktionen. Eine Responsefunktion kann bestimmt werden, indem eine Punktquelle durch das Gesichtsfeld eines einzelnen Pixels geschwenkt wird und dabei der Verlauf der Antwort (das bedeutet, das Signal) gegenüber einem Winkel und gegenüber einem Abstand von der optischen Achse des Pixels aufgetragen wird. Diese Funktion kann dann essenziell herangezogen werden, um aus der relativen Response benachbarter Pixel auf die gleiche Punktquelle die relative Position dieser gegenüber den optischen Achsen der betroffenen Detektorpixel zu ermitteln, insbesondere da auch die relative Position der Detektorpixel zueinander bekannt ist. Für Hyperacuity oder Hyperauflösung ist der Überlapp der Responsefunktionen vorteilhaft, solange sie nicht so groß sind, dass gleichzeitig mehrere Lichtpunkte in ihnen eine Response auslösen. Dies kann auch mit der Einstellung des Abtastwinkels zusammenhängen.

Fig. 6b zeigt das Konzept aus Fig. 6a an dem näher an Ausführungsbeispielen liegenden zweidimensionalen Teil mit einer zweidimensionalen Anordnung von Detektor-Pixeln. So wird beispielsweise der Punkt 26 auf drei Detektor-Pixel abgebildet, so dass aus den drei zweidimensional verteilten Amplitudenwerten 68₁, 68₂ und 68₃ durch Paarbildung 68₁ und 68₂ bzw. 68₂ und 68₃ eine zweidimensionale Koordinate des abgebildeten Punktes 26' bestimmbar ist. Die Koordinate x₁/y₁ kann dabei aus Abständen 76₁, 76₂, 76₃ und 76₄ bzw. Differenzen der Amplitudenwerte 68₁ bis 68₄ zu Maximalamplituden bestimmt werden. Die Abtastung kann dabei so gewählt werden, dass statistisch nie mehr als ein Lichtpunkt gleichzeitig in die Responsefunktion eines Pixels fällt, um Mehrdeutigkeiten zu vermeiden.

In anderen Worten beziehen sich Ausführungsbeispiele darauf, basierend auf dem Wissen um das Vorliegen voneinander getrennter projizierter Lichtpunkte und Kenntnis des genauen Verlaufs der einzelnen Responsefunktionen der Pixel eine genaue Positionsbestimmung der Lichtpunkte zu erhalten, die relativ zu den Achsen benachbarter Pixel durch einen konkreten Vergleich der gemessenen Signal erhalten wird.

In anderen Worten funktioniert das im Zusammenhang mit Fig. 6a beschriebene Konzept auch in 2D, etwa in x/y-Koordinaten und auch in Sub-Pixelgenauigkeit. Hierfür kann das System insgesamt durch ein angepasstes Design bezüglich der Größe der Responsefunktionen, deren Abstand (Abtastung) und der Dichte der projizierten Lichtpunkte so eingestellt sein, dass sich (zumindest im statistischen Mittel) nie gleichzeitig mehr als ein Lichtpunkt in der dargestellten Dreier-Gruppe von Responsefunktionen befindet, da es ansonsten zu Uneindeutigkeiten bzw. Mehrdeutigkeiten kommen kann. Diese Mehrdeutigkeiten können zwar auftreten, die mit entsprechendem Berechnungsaufwand aufgelöst werden können. Dieser Berechnungsaufwand kann durch die Vermeidung der Mehrdeutigkeiten eingespart werden.

Die Auswerteeinrichtung einer hierin beschriebenen Vorrichtung kann ausgebildet sein, um die bestimmte Position von Lichtpunkten über mehrere optische Kanäle zu erhalten, um daraus ein Muster abzuleiten. Dieses Muster kann von der Auswerteeinrichtung mit einem Referenzmuster verglichen werden, um eine Verzerrung in dem Muster zu bestimmen, woraus eine Tiefenkarte ableitbar ist. Unter Berücksichtigung der Geometrie zwischen Gesichtsfeld, ggf. dem Projektor, und der Anordnung der optischen Kanäle kann eine eindeutige Tiefenkarte erstellt werden. Der Vergleich von Signalstärken unterschiedlicher Detektor-Pixel kann dabei von der Auswerteinrichtung so ausgeführt werden, dass die Positionen von Punkten des Punktmusters bestimmbar sind, die präziser sind, als eine Abtastung des Gesamtgesichtsfeldes mittels der Detektor-Pixel, was hierin als klassische Abtastung oder Auflösung des Bildes beschrieben ist. Der Vergleich von Signalwerten ermöglicht die Sub-Pixel genaue Auflösung der Positionen. Basierend auf einer Bewertung einer Lichtstärke, der Signalamplituden 68, benachbarter Detektor-Pixel unter Berücksichtigung einer Responsefunktion der Detektor-Pixel können so Positionen von Punkten in dem Bild bestimmt werden.

Die Auswerteeinrichtung kann somit eine Verzerrung in dem Punktmuster bestimmen und basierend auf der Verzerrung eine Tiefenkarte des Gesichtsfeldes erstellen. Basierend auf der Tiefenkarte kann das Auswerteergebnis erhalten werden. Vereinfacht ausgedrückt kann die Tiefenkarte eine Auskunft darüber liefern, ob ein autorisierter Nutzer erkannt wird. Ist die Vorrichtung beispielsweise eine Smartwatch kann diese entsperrt werden oder eine dem Benutzer zugeordnete Information, insbesondere durch die hier auch beschriebene Anzeigevorrichtung, dargestellt werden oder eine andere Betriebsart, die von dem erkannten Nutzer abhängt, eingestellt werden. Gemäß einem Ausführungsbeispiel kann basierend auf dem Auswerteergebnis eine Nutzungsberechtigung eines Nutzers, der zumindest teilweise in dem Gesichtsfeld angeordnet ist, bestimmt werden und in Übereinstimmung mit der Nutzungsberechtigung von der Auswerteeinrichtung gesteuert werden.

Die Auswerteeinrichtung kann ausgebildet sein, um das Gesichtsfeld 22 mit einer Mehrzahl von Detektor-Pixeln je optischen Kanal und anschließend bezüglich mehrerer optischer Kanäle auszuwerten. Das bedeutet, die in dem jeweiligen optischen Kanal festgestellte Position eines Lichtpunktes kann zu einem Gesamtmuster zusammengesetzt werden.

In anderen Worten kann die Größe der winkelmäßigen Responsefunktion (auch Punktbildantwort) eine Abbildungsvorrichtung einerseits vom Beugungslimit (bestimmt durch Wellenlänge und Blenden- bzw. Linsengröße) und andererseits von der Größe eines Detektorpixels relativ zur Brennweite der Optik abhängen. Für sehr kurze Optiken (Brennweite wenige 100 µm) kann der zweite Aspekt eine vergleichsweise große Rolle spielen, für klassische Miniaturobjektive wird er hingegen oft vernachlässigt. Wenn ca. 10.000 sehr kleine Lichtpunkte verteilt über ein typisches diagonales Gesichtsfeld von 70° bis 90° konventionell aufgelöst/getrennt werden sollen und mit ca. 3 µm bis 5 µm großen Detektorpixeln abgebildet werden sollten, würde auch eine Array-Optik mit einer Baulänge deutlich größer als 1 mm resultieren, welche unter Umständen eine Integration in mobile Vorrichtungen, etwa Smart-Watches oder dergleichen verhindern könnte.

Da die Natur des Musters, in dem die Position vieler Lichtquellen hochgenau zu bestimmen ist, aber bekannt ist, und ebenso, dass die Lichtpunkte so ausreichend voneinander getrennt sind, dass sich bei angepasster Auslegung der Optik statistisch nie gleichzeitig mehrere Lichtpunkte im Responsebereich eines Detektorpixels befinden, sich aber ein Lichtpunkt gleichzeitig im Responsebereich mehrerer benachbarter Detektorpixel befinden kann, ist es nicht erforderlich, das Punktmuster nach Rayleigh-, Sparrow- und/oder Abbe-Kriterien aufzulösen, wofür wiederum die Responsefunktionen deutlich enger sein und deswegen die Brennweite und damit die Baulänge deutlich größer als für die angestrebte Applikation zielführend sein müssten. Stattdessen werden in den Ausführungsbeispielen einander stark überlappende Responsefunktionen genutzt, die Zahl der Responsefunktionen, welche das Gesichtsfeld abtasten ist dabei groß genug gewählt, um sicherzustellen, dass sich nie gleichzeitig mehrere Lichtpunkte (zumindest im statistischen Mittel) in einer Responsefunktion wiederfinden und die relativen Signale benachbarter Responsefunktionen auf dem gleichen Lichtpunkt werden verwendet, um die genaue Position dieses Lichtpunkts und auf die gleiche Art und Weise aller anderen der Projektion innerhalb des Gesichtsfeldes hochgenau zu bestimmen.

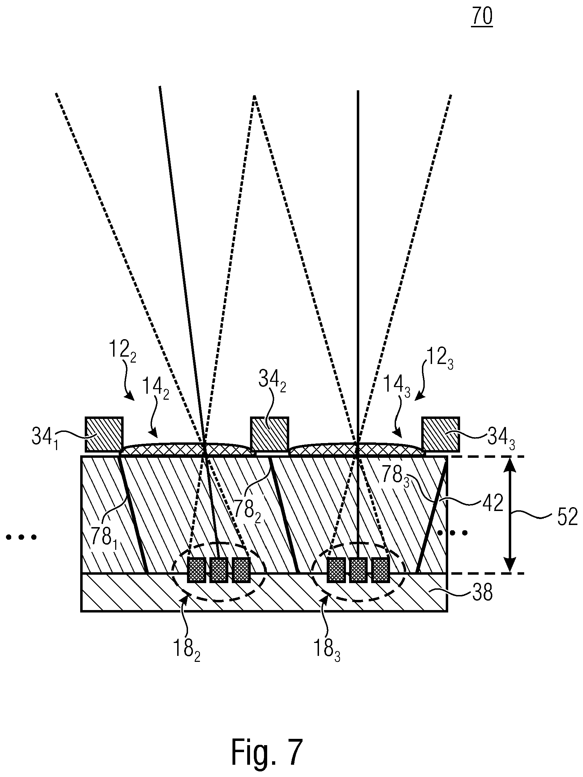

Ein Substrat mit Linsen darauf oder mit mehreren Blendenlagen, um ein Übersprechen zwischen den Kanälen zu verhindern, kann ebenso vorgesehen sein, wie in Fig. 7 dargestellte zumindest teilweise opake und möglicherweise geneigte Wände zur optischen Kanalisolation.

Fig. 7 zeigt eine schematische Seitenschnittansicht eines Teils einer Vorrichtung 70, die gegenüber der Vorrichtung 10 oder 20 so modifiziert ist, dass alternativ zu den Blenden 46₁ und 46₂, die in den Vorrichtungen 10 und 20 optional sind, falschlichtunterdrückende Strukturen 78₁, 78₂ und 78₃ angeordnet sein können, welche je zwischen benachbarten Detektorpixel-Anordnungen 18₂ bis 18₃ und/oder weiterer Detektorpixelanordnungen angeordnet sind. Obwohl die falschlichtunterdrückende Strukturen 78₁, 78₂ und 78₃ mit gleicher Dicke und geneigt gegenüber einer Substrathauptseite dargestellt sind, was eine Anpassung an einen Strahlengang der optischen Kanäle ermöglicht, kann alternativ auch eine veränderliche Dicke und/oder eine senkrechte Anordnung zur Substrathauptseite vorgesehen sein, ohne diesen Vorteil notwendigerweise aufzugeben.

In der Darstellung der Fig. 7 ist das transparente Material 42 zwischen den Anzeige-Pixeln 34 und dem Detektorpixelsubstrat 38 angeordnet. In manchen Ausführungsformen kann der Abstand 52 ganz oder teilweise durch die falschlichtunterdrückenden Strukturen 78₁, 78₂ und/oder 78₃ eingestellt werden, das bedeutet, das transparente Material 42 kann auch ein nicht-festes, etwa flüssiges oder gasförmiges Material sein, etwa Luft. Die falschlichtunterdrückenden Strukturen 78₁, 78₂ und 78₃ können Einzelstrukturen sein, können aber auch eine gemeinsame und untereinander verbundene Struktur bereitstellen, die in einer Aufsicht an eine Gitterstruktur erinnert. Beispielsweise kann vorgesehen sein, dass die Optiken 14 unterschiedlicher optischer Kanäle über ein gemeinsames Substrat miteinander verbunden sind und die falschlichtunterdrückende Struktur mit diesem Substrat und beispielsweise dem Detektorpixelsubstrat 38 verbunden ist. Alternativ können die Optiken auch einzeln in Zwischenräume zwischen falschlichtunterdrückenden Strukturen eingesetzt werden und so gehaltert werden. Auch hier kann ein Luftraum zwischen Linsen und einem Bildsensor erhalten werden. Beispielsweise kann das transparente Material 42 vergleichsweise dünn ausgeführt sein und mittels der falschlichtunterdrückenden Strukturen vom Substrat 38 beabstandet werden.

In einer beispielhaften Ausführung weist das Projektionsmuster beispielsweise 10.000 Punkte auf, die vereinfacht in einem Muster von 100x100 über das Gesichtsfeld (Field of View - FOV) darstellbar sind, was in einer eindimensionalen Darstellung in 100 Punkten resultiert. Es wird dabei darauf hingewiesen, dass trotz der regelmäßigen Darstellung des Musters ein derartiges Muster in der Regel unregelmäßig ist. In einem klassischen Abbildungsansatz konventioneller Kameras oder auch konventioneller Array-Kameras, von denen sich hierin beschriebene Ausführungsbeispiele unterscheiden, wird so verfahren, dass zum Feststellen verschobener Positionen der oben beschriebenen Punkte im FOV in hinreichend genauem Maße ein ca. 1-Megapixel-Bildsensor, das heißt, 1000x1000 Pixel, im 1D-Fall 1000 Pixel, verwendet werden, um in etwa ein Verhältnis von 10 Pixel/Punkt zu erhalten, um eine hinreichend genaue Positionsgenauigkeit oder Auflösung zu erhalten.

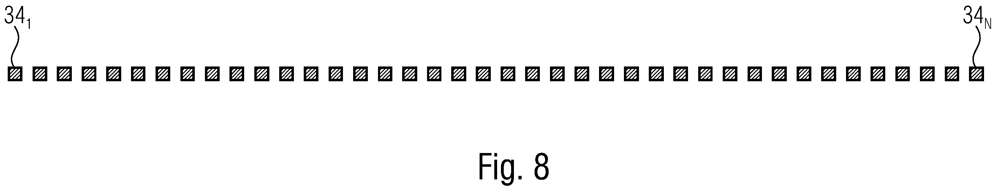

Hieraus ergibt sich der in Fig. 8 dargestellte Vergleich der Pixeldichte über das Gesichtsfeld (unschraffiert) zu projizierter Punktdichte über das Gesichtsfeld (schraffiert). Obwohl lediglich eine geringe Punktdichte vorliegt, muss die Pixeldichte um ein deutliches höher liegen, um die geforderte Genauigkeit der Positionsbestimmung der auf eine Oberfläche projizierten Punkte zu erreichen (im Beispiel ca. ein Zehnfaches), da mit diesem Verfahren beispielsweise festgestellt wird, ob diskret ein Punkt auf diesem oder jenem Pixel liegt. Um wiederum die für diese Abtastung notwendige Auflösung der Optik-Detektor-Anordnung zu erreichen, wird das System sehr lang, und eine hohe Anzahl an Kanälen wird vorgesehen, da jedem Pixel eine nur sehr schmale Responsefunktion zugeordnet werden kann oder soll oder darf, um die geforderte Präzision zu erhalten.

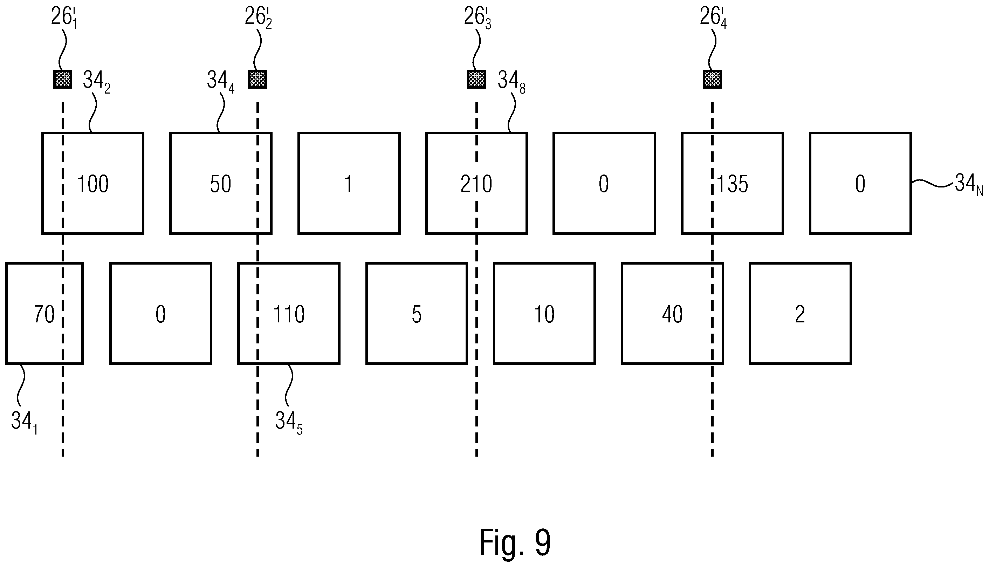

Fig. 9 zeigt dahingegen eine erfindungsgemäße Auswertung von Detektorpixeln 34₁ bis 34ₙ. Obwohl die Detektorpixel 34 in zwei Zeilen dargestellt sind, bezieht sich das Beispiel auf eine einzeilige Anordnung, die lediglich deshalb zweizeilig dargestellt ist, um den Überlapp der Responsefunktionen, die beispielsweise in den Fig. 4b, 4c, 4d und insbesondere 6a und 6b dargestellt sind, zu erläutern. Die von beispielsweise je zwei oder mehr Detektorpixeln 34 erfassten Punkte 26'₁ bis 26'₄ liefern in den jeweiligen Detektorpixeln Amplitudenwerte, die mittels der Zahlenwerte dargestellt sind. Beispielsweise liefert der abgebildete Punkt 26', im Detektorpixel 34₁ einen Signalwert von 70 und in dem Detektorpixel 34₂ einen Signalwert von 100, wobei beispielhaft eine 8-Bit-Quantisierung mit Signalwerten von 0 bis 255 implementiert ist. Beliebige andere Werte sind in Ausführungsbeispielen möglich, etwa eine 4-Bit-Quantisierung, eine 6-Bit-Quantisierung, eine 8-Bit-Quantisierung, eine 12-Bit-Quantisierung oder beliebige andere Werte. Durch Vergleich der Werte benachbarter Detektorpixel kann mit Kenntnis des Verlaufs deren Responsefunktionen die Position des jeweiligen Punktes 26'₁ bis 26'₄ präzise geschätzt werden, selbst wenn eine wesentlich geringere Anzahl von Detektorpixeln vorgesehen ist als in der Konfiguration gemäß Fig. 8.

In anderen Worten ermöglicht der erfindungsgemäße Ansatz den Einsatz deutlich weniger Pixel pro zu erfassendem Punkt, da die Positionsgenauigkeit der Punkte nicht über die Pixelpositionen, sondern über die relativen Signale benachbarter Pixel bestimmt wird. Dies funktioniert insbesondere, da die Szene vorbekannt ist und Kenntnis darüber besteht, dass es sich um disjunkte Punkte handelt. Ansonsten kommt es zu Uneindeutigkeiten. Die Responsefunktionen können, sollen oder müssen dafür sogar breit sein und deswegen kann das System bezüglich seiner Baulänge kürzer sein bzw. eine kürzere Brennweite implementiert werden. Die Fig. 9 zeigt dabei eine ähnliche Darstellung, wie sie schon im Zusammenhang mit den Fig. 4a bis d, 5 und 6a bis b dargestellt ist, wo beispielsweise über die Breite der Responsefunktion in einem 2D-Feld zum Beispiel als 1/e²-Breite definierende Kreise dargestellt sind.

Die Darstellung ließe sich auch noch durch nebeneinander dargestellte Kurvenverläufe der Responsefunktionen darstellen. Unter Bezugnahme auf Fig. 8 ergäbe dies viele, sehr enge und voneinander getrennte Kreise, während die erfindungsgemäße Ausführung gemäß Fig. 9 wenige und einander überlappende Responsefunktionen bereitstellt, wobei jeweils eine Responsefunktion je eingezeichnetem Pixel erhalten würde. Die beispielhaften Grauwerte können von 0 bis 255 im einzelnen Pixel als Signalwert dargestellt sein. Für den Vergleich der Fig. 8 und 9 ist dabei eine gleiche Punktdichte im Gesichtsfeld angenommen. Die deutlich geringere Pixeldichte und die breiteren Responsefunktionen (größere Winkel- (im Objektraum) bzw. Flächenausdehnung (im Bildraum)) ermöglicht jedoch die erfindungsgemäßen Vorteile. Aus der Signalstärke jedes Pixels und der Kenntnis des Verlaufs der Responsefunktion kann eine Bestimmung der Lage des Punktes relativ zur optischen Achse des jeweiligen Pixels erfolgen. Die Darstellung äquidistanter Punktmuster ist lediglich der Einfachheit halber gewählt. Die Anzahl der Pixel pro Kanal kann dabei prinzipiell beliebig sein. Die Pixelgruppen pro Kanal, die Kanalanzahl und damit der Flächenbedarf können gering gehalten oder gar minimiert werden.

Gemäß einem Ausführungsbeispiel umfasst ein Verfahren zum Bereitstellen einer Vorrichtung unter anderem ein Bereitstellen einer Mehrzahl von gegeneinander geneigten abbildenden optischen Kanälen, von denen jeder eine Optik und zumindest eine Detektorpixelanordnung umfasst, so dass die Mehrzahl von optischen Kanälen ausgebildet sind, um durch Abbildung eines Gesichtsfeldes ein Bild eines Punktmusters vom Gesichtsfeld zu erhalten. Das Verfahren umfasst ferner ein Bereitstellen einer Anzeigeeinrichtung, die eine Vielzahl von in einer Anzeige-Ebene angeordnet Anzeige-Pixel aufweist, so dass die Anzeige-Pixel ausgebildet sind, um eine graphische Information anzuzeigen. Das Verfahren wird ausgeführt, so dass die optischen Kanäle durch die Anzeige-Ebene verlaufen und die Abbildung des Gesichtsfeldes zwischen Anzeige-Pixeln hindurch eingerichtet ist. Das Verfahren umfasst ferner ein Koppeln einer Auswerteeinrichtung mit Detektorpixeln der Detektorpixelanordnungen und ein Konfigurieren der Auswerteeinrichtung, so dass diese eingerichtet ist, um das Punktmuster basierend auf einem eine Hyperauflösung bewirkenden Vergleich von Signalstärken unterschiedlicher Detektorpixel unter Kenntnis deren Responsefunktionen auszuwerten, um ein Auswerteergebnis zu erhalten, und um die Vorrichtung zumindest teilweise basierend auf dem Auswerteergebnis zu steuern.

Ausführungsbeispiele ermöglichen flache oder ultra-flache Aufbauten einer Abbildungseinheit. Diese können so dünn sein, dass sie nur Bruchteile eines Millimeters dick sind. Dies ist insbesondere für die Anwendung in einer Smart-Watch oder anderen Smart-Devices sehr vorteilhaft, da hierzu zusätzliche Dicke oder Bauraum noch größere Probleme bereitet als beispielsweise in einem konventionellem Smartphone, aber in beiden vermieden werden kann. Die Ausführungsbeispiele können kostengünstig durch Herstellung im Wafermaßstab hergestellt werden. Ausführungsbeispiele ermöglichen eine Anpassung der Array-Optik an die Abbildungsaufgabe, insbesondere eine Positionsbestimmung voneinander disjunkter projizierter Lichtpunkte und erlaubt eine weitere Baulängenverkürzung gegenüber einer Array-Optik, die das Punktmuster konventionell auflösen müsste.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung mit:
einer Mehrzahl von gegeneinander geneigten abbildenden optischen Kanälen (12), von denen jeder eine Optik (14), umfassend eine Linse oder einen Linsenstapel, und zumindest eine Detektorpixelanordnung (16) umfasst; wobei die Mehrzahl von optischen Kanälen (12) ausgebildet sind, um durch Abbilden eines Gesichtsfeldes (22) ein Bild eines Punktmusters (24) von dem Gesichtsfeld (22) zu erhalten;
einer Anzeigeeinrichtung (28), die eine Vielzahl von in einer Anzeige-Ebene (32) angeordnete Anzeige-Pixel (34) aufweist, die ausgebildet sind um eine graphische Information anzuzeigen;
wobei die optischen Kanäle (12) durch die Anzeige-Ebene (32) verlaufen und für die Abbildung des Gesichtsfeldes (22) zwischen den Anzeige-Pixeln (34) hindurch eingerichtet sind;
eine Auswerteeinrichtung (36), die mit Detektorpixeln (18) der Detektorpixelanordnungen (16) gekoppelt ist und ausgebildet ist, um das Punktmuster (24) basierend auf einem eine Hyperauflösung bewirkenden Vergleich von Signalstärken unterschiedlicher Detektorpixel (18) auszuwerten, um ein Auswerteergebnis zu erhalten, und um die Vorrichtung zumindest teilweise basierend auf dem Auswerteergebnis zu steuern,
wobei die Auswerteeinrichtung (36) ausgebildet ist, um basierend auf einer Bewertung einer Lichtstärke mit der derselbe Punkt des Punktmusters auf benachbarte Detektorpixel (18) abgebildet wird, unter Berücksichtigung einer Responsefunktion der Detektorpixel (18) Positionen von Punkten in dem Bild zu bestimmen.

2. Vorrichtung gemäß Anspruch 1, bei der die optischen Kanäle (12) als Abbildungseinrichtung eingerichtet sind, und die Anzeige-Pixel (34) eine flächige Anordnung aufweisen, die in Zwischenbereichen der optischen Kanäle (12) angeordnet sind oder auf den Linsen der optischen Kanäle (12).

3. Vorrichtung gemäß Anspruch 1 oder 2, die einen Projektor aufweist, der ausgebildet ist, um das Punktmuster (24) auszusenden.

4. Vorrichtung gemäß Anspruch 3, bei dem der Projektor ausgebildet ist, um das Punktmuster (24) mit einem Infrarotspektrum auszusenden; wobei die optischen Kanäle (12) auf das Infrarotspektrum angepasst sind und/oder das Infrarotspektrum selektiv erfassen.

5. Vorrichtung gemäß Anspruch 3 oder 4, bei der der Projektor ausgebildet ist, um das Punktmuster (24) als ein zumindest abschnittsweise nicht-periodisches oder pseudo-zufälliges Muster auszusenden.

6. Vorrichtung gemäß einem der Ansprüche 3 bis 5, bei der der Projektor und die Anordnung der optischen Kanäle (12) so aufeinander abgestimmt sind, um bei einer Referenzentfernung (56) des Gesichtsfeldes (22) zur Vorrichtung das Punktmuster (24) so auszusenden und aufzunehmen, dass im Mittel jedes Detektorpixel (18) gleichzeitig höchstens einen Punkt (26) des Punktmusters (24) erfasst.

7. Vorrichtung gemäß einem der vorangehenden Ansprüche, bei der die Auswerteeinrichtung (36) ausgebildet ist, um den Vergleich von Signalstärken unterschiedlicher Detektorpixel (18) auszuführen, um die Positionen von Punkten (26') des Punktmusters (24) zu bestimmen, die präziser ist, als eine Abtastung des Gesamt-Gesichtsfeldes (22) mittels der Detektorpixel (18).

8. Vorrichtung gemäß einem der vorangehenden Ansprüche, bei der die Auswerteeinrichtung (36) ausgebildet ist, um eine Verzerrung in dem Punktmuster (24) zu bestimmen und basierend auf der Verzerrung eine Tiefenkarte des Gesichtsfeldes (22) zu erstellen, und um basierend auf der Tiefenkarte das Auswerteergebnis zu erhalten.

9. Vorrichtung gemäß einem der vorangehenden Ansprüche, bei der die Optiken (14) zwischen benachbarten Anzeige-Pixeln (34) angeordnet sind.

10. Vorrichtung gemäß einem der vorangehenden Ansprüche, bei der Brennweiten der optischen Kanäle (12) weniger als 1 mm betragen.

11. Vorrichtung gemäß einem der vorangehenden Ansprüche, bei der Mikrolinsen unterschiedlicher optischer Kanäle kanalindividuelle optische Eigenschaften aufweisen.

12. Vorrichtung gemäß einem der vorangehenden Ansprüche, die für eine Gesichtserkennung eines Nutzers, insbesondere eine tiefenkartenbasierte Gesichtserkennung, eingerichtet ist.

13. Vorrichtung gemäß einem der vorangehenden Ansprüche, die als Smart-Watch gebildet ist.

14. Verfahren zum Bereitstellen einer Vorrichtung mit folgenden Schritten:
Bereitstellen einer Mehrzahl von gegeneinander geneigten abbildenden optischen Kanälen (12), von denen jeder eine Optik (14), umfassend eine Linse oder einen Linsenstapel, und zumindest eine Detektorpixelanordnung (16) umfasst; so dass die Mehrzahl von optischen Kanälen (12) ausgebildet sind, um durch Abbildung eines Gesichtsfeldes (22) ein Bild eines Punktmusters (24) von dem Gesichtsfeld (22) zu erhalten;
Bereitstellen einer Anzeigeeinrichtung (28), die eine Vielzahl von in einer Anzeige-Ebene (32) angeordnete Anzeige-Pixel (34) aufweist, so dass die Anzeige-Pixel (34) ausgebildet sind um eine graphische Information anzuzeigen,
so dass die optischen Kanäle (12) durch die Anzeige-Ebene verlaufen und für die Abbildung des Gesichtsfeldes (22) zwischen Anzeige-Pixeln (34) hindurch eingerichtet sind;
Koppeln einer Auswerteeinrichtung (36) mit Detektorpixeln (18) der Detektorpixelanordnungen (16) und Konfigurieren der Auswerteeinrichtung (36), so dass diese eingerichtet ist, um das Punktmuster (24) basierend auf einem eine Hyperauflösung bewirkenden Vergleich von Signalstärken unterschiedlicher Detektorpixel (18) auszuwerten, um ein Auswerteergebnis zu erhalten, und um die Vorrichtung zumindest teilweise basierend auf dem Auswerteergebnis zu steuern und Konfigurieren der Auswerteeinrichtung (36), sodass diese ausgebildet ist, um basierend auf einer Bewertung einer Lichtstärke, mit der derselbe Punkt des Punktmusters auf benachbarte Detektorpixel (18) abgebildet wird, unter Berücksichtigung einer Responsefunktion der Detektorpixel (18) Positionen von Punkten in dem Bild zu bestimmen.

## Claims

1. Device comprising:
a plurality of imaging optical channels (12) inclined in relation to one another, each of which includes an optic (14) including a lens or a lens stack, and at least one detector pixel arrangement (16); the plurality of optical channels (12) being configured to obtain an image of a dot pattern (24) of a field of view (22) by imaging said field of view (22);
display means (28) comprising a multitude of display pixels (34) arranged within a display plane (32), the display pixels (34) being configured to display graphic information;
wherein the optical channels (12) pass through the display plane (32) and are set up for imaging the field of view (22) between the display pixels (34);
evaluation means (36) coupled to detector pixels (18) of the detector pixel arrangements (16) and configured to evaluate the dot pattern (24) on the basis of a comparison, which causes hyper resolution, of signal intensities of different detector pixels (18) so as to obtain an evaluation result, and to control the device at least partly on the basis of the evaluation result,
wherein the evaluation means (36) is configured to determine positions of dots in the image on the basis of an evaluation of a light intensity with which the same dot of the dot pattern is projected onto adjacent detector pixels (18) and while taking into account a response function of the detector pixels (18).

2. Device as claimed in claim 1, wherein the optical channels (12) are implemented as imaging means, and the display pixels (34) have a planar arrangement arranged in intermediate areas of the optical channels (12) or on the lenses of the optical channels (12).

3. Device as claimed in claim 1 or 2, comprising a projector configured to emit the dot pattern (24).

4. Device as claimed in claim 3, wherein the projector is configured to emit the dot pattern (24) with an infrared spectrum; wherein the optical channels (12) are adapted to the infrared spectrum and/or selectively sense the infrared spectrum.

5. Device as claimed in claims 3 or 4, wherein the projector is configured to emit the dot pattern (24) as a pattern that is non-periodic or pseudo-random at least in portions.

6. Device as claimed in any of claims 3 to 5, wherein the projector and the arrangement of the optical channels (12) are matched to each other such as to emit and capture the dot pattern, at a reference distance (56) of the field of view (22) from the device, such that each detector pixel (18) senses, on average, at the most one dot (26) of the dot pattern (24) at a time.

7. Device as claimed in any of the previous claims, wherein the evaluation means (36) is configured to perform the comparison of signal intensities of different detector pixels (18) so as to determine the positions of dots (26') of the dot pattern (24) that are more precise than would be achieved by sampling the total field of view (22) by means of the detector pixels (18).

8. Device as claimed in any of the previous claims, wherein the evaluation means (36) is configured to determine a distortion in the dot pattern (24) and to produce a depth map of the field of view (22) on the basis of the distortion, and to obtain the evaluation result on the basis of the depth map.

9. Device as claimed in any of the previous claims, wherein the optics (14) are arranged between adjacent display pixels (34).

10. Device as claimed in any of the previous claims, wherein the focal lengths of the optical channels (12) amount to less than 1 mm.

11. Device as claimed in any of the previous claims, wherein the micro lenses of different optical channels exhibit channel-specific optical properties.

12. Device as claimed in any of the previous claims, which is set up for facial recognition of a user, in particular depth-map based facial recognition.

13. Device as claimed in any of the previous claims, which is formed as a smart watch.

14. Method of providing a device, comprising:
providing a plurality of imaging optical channels (12) inclined in relation to one another, each of which includes an optic (14) including a lens or a lens stack, and at least one detector pixel arrangement (16); so that the plurality of optical channels (12) is configured to obtain an image of a dot pattern (24) of a field of view (22) by imaging said field of view (22);
providing display means (28) comprising a multitude of display pixels (34) arranged within a display plane (32), so that the display pixels (34) are configured to display graphic information;
so that the optical channels (12) pass through the display plane (32) and are set up for imaging the field of view (22) between the display pixels (34);
coupling evaluation means (36) to detector pixels (18) of the detector pixel arrangements (16) and configuring the evaluation means (36) such that same is set up to evaluate the dot pattern (24) on the basis of a comparison, which causes hyper resolution, of signal intensities of different detector pixels (18) so as to obtain an evaluation result, and configuring the evaluation means (36) to be configured to determine positions of dots in the image on the basis of an evaluation of a light intensity with which the same dot of the dot pattern is projected onto adjacent detector pixels (18) and while taking into account a response function of the detector pixels (18).

## Revendications

1. Dispositif comprenant :
une pluralité de canaux optiques d'imagerie (12) inclinés les uns par rapport aux autres, dont chacun comprend un système optique (14), incluant une lentille ou un empilement de lentilles, et au moins un réseau de pixels de détection (16) ; dans lequel la pluralité de canaux optiques (12) est configurée pour obtenir, par imagerie d'un champ de vision (22), une image d'un motif de points (24) provenant dudit champ de vision (22) ;
un dispositif d'affichage (28) comprenant une multitude de pixels d'affichage (34) disposés dans un plan d'affichage (32) et configurés pour afficher une information graphique ;
dans lequel les canaux optiques (12) traversent le plan d'affichage (32) et sont configurés pour assurer l'imagerie du champ de vision (22) entre les pixels d'affichage (34) ;
un dispositif d'évaluation (36) couplé aux pixels de détection (18) des réseaux de pixels de détection (16) et configuré pour analyser le motif de points (24) sur la base d'une comparaison, permettant d'obtenir une hyper-résolution, des intensités de signal de différents pixels de détection (18), afin d'obtenir un résultat d'évaluation, et pour commander le dispositif au moins en partie sur la base du résultat d'évaluation,
dans lequel le dispositif d'évaluation (36) est configuré pour déterminer les positions des points dans l'image sur la base d'une évaluation de l'intensité lumineuse avec laquelle le même point du motif de points est imagé sur des pixels de détection adjacents (18), en tenant compte d'une fonction de réponse des pixels de détection (18).

2. Dispositif selon la revendication 1, dans lequel les canaux optiques (12) sont configurés en tant que dispositif de formation d'image, et les pixels d'affichage (34) comprennent une disposition en surface agencée dans des zones intermédiaires des canaux optiques (12) ou sur les lentilles des canaux optiques (12).

3. Dispositif selon la revendication 1 ou 2, comprenant un projecteur configuré pour émettre le motif de points (24).

4. Dispositif selon la revendication 3, dans lequel le projecteur est configuré pour émettre le motif de points (24) dans le spectre infrarouge ; dans lequel les canaux optiques (12) sont adaptés au spectre infrarouge et/ou détectent de manière sélective le spectre infrarouge.

5. Dispositif selon la revendication 3 ou 4, dans lequel le projecteur est configuré pour émettre le motif de points (24) sous la forme d'un motif au moins en partie non périodique ou pseudo-aléatoire.

6. Dispositif selon l'une des revendications 3 à 5, dans lequel le projecteur et l'agencement des canaux optiques (12) sont coordonnés de manière à émettre et à capter, à une distance de référence (56) entre le champ de vision (22) et le dispositif, le motif de points (24) de telle sorte qu'en moyenne, chaque pixel de détection (18) détecte simultanément au plus un point (26) du motif de points (24).

7. Dispositif selon l'une des revendications précédentes, dans lequel le dispositif d'évaluation (36) est configuré pour effectuer la comparaison des intensités de signal de différents pixels de détection (18) afin de déterminer les positions de points (26') du motif de points (24), lesquelles sont plus précises qu'un balayage de l'ensemble du champ de vision (22) au moyen des pixels de détection (18).

8. Dispositif selon l'une des revendications précédentes, dans lequel le dispositif d'évaluation (36) est configuré pour déterminer une distorsion dans le motif de points (24) et pour établir, sur la base de la distorsion, une carte de profondeur du champ de vision (22), ainsi que pour obtenir le résultat d'évaluation sur la base de la carte de profondeur.

9. Dispositif selon l'une des revendications précédentes, dans lequel les systèmes optiques (14) sont disposées entre des pixels d'affichage adjacents (34).

10. Dispositif selon l'une des revendications précédentes, dans lequel les distances focales des canaux optiques (12) sont inférieures à 1 mm.

11. Dispositif selon l'une des revendications précédentes, dans lequel les microlentilles de différents canaux optiques comprennent des propriétés optiques propres à chaque canal.

12. Dispositif selon l'une des revendications précédentes, configuré pour la reconnaissance faciale d'un utilisateur, en particulier une reconnaissance faciale basée sur une carte de profondeur.

13. Dispositif selon l'une des revendications précédentes, réalisé sous la forme d'une montre connectée.

14. Procédé de mise à disposition d'un dispositif, comprenant le fait de :
fournir une pluralité de canaux optiques d'imagerie (12) inclinés les uns par rapport aux autres, dont chacun comprend un système optique (14), incluant une lentille ou un empilement de lentilles, et au moins un réseau de pixels de détection (16) ; de sorte que ladite pluralité de canaux optiques (12) soit configurée pour obtenir, par imagerie d'un champ de vision (22), une image d'un motif de points (24) provenant dudit champ de vision (22) ;
fournir un dispositif d'affichage (28) comprenant une multitude de pixels d'affichage (34) disposés dans un plan d'affichage (32), de telle sorte que les pixels d'affichage (34) soient configurés pour afficher une information graphique, de telle sorte que les canaux optiques (12) traversent le plan d'affichage et soient configurés pour assurer l'imagerie du champ de vision (22) entre les pixels d'affichage (34) ;
coupler un dispositif d'évaluation (36) aux pixels de détection (18) des réseaux de pixels de détection (16) et configurer le dispositif d'évaluation (36), de sorte que celui-ci soit configuré pour analyser le motif de points (24) sur la base d'une comparaison, permettant d'obtenir une hyper-résolution, des intensités de signal de différents pixels de détection (18), afin d'obtenir un résultat d'évaluation, et pour commander le dispositif au moins en partie sur la base du résultat d'évaluation, et configurer le dispositif d'évaluation (36), de sorte que celui-ci soit configuré pour déterminer les positions des points dans l'image sur la base d'une évaluation de l'intensité lumineuse avec laquelle le même point du motif de points est imagé sur des pixels de détection adjacents (18), en tenant compte d'une fonction de réponse des pixels de détection (18).
